# EUROPÄISCHE PATENTSCHRIFT

(11) **EP 3 311 460 B1**
(45) Veröffentlichungstag und Bekanntmachung des Hinweises auf die Patenterteilung: **05.01.2022**
(21) Anmeldenummer: 16731092.9
(22) Anmeldetag: 16.06.2016
(51) Int. Cl.: H02J 3/14, H02J 3/32, H02J 3/38, H02J 3/00

(54) **VERTEILTES ENERGIE-WANDLUNGS-SYSTEM**
DISTRIBUTED ENERGY CONVERSION SYSTEM
SYSTÈME DISTRIBUÉ DE CONVERSION D'ÉNERGIE

(30) Priorität: 16.06.2015 LU 92742
(43) Veröffentlichungstag der Anmeldung: 25.04.2018
(73) Patentinhaber: Universität Duisburg-Essen, 45141 Essen (DE)
(72) Erfinder: DERKSEN, Christian, 45138 Essen (DE)
(74) Vertreter: RCD Patent Giesen, Schmelcher & Griebel Patentwanwälte PartG mbB
(86) Internationale Anmeldenummer: PCT/EP2016/063834
(87) Internationale Veröffentlichungsnummer: WO 2016/202903

(56) Entgegenhaltungen:
- DE-A1-102012 103 081
- DE-A1-102013 222 277
- US-A1- 2014 012 427
- Reddy S. Yogendra ET AL: "A modular power electronic transformer for medium voltage application", Electrical Engineering. PNC & VIET, 30 September 2012 (2012-09-30), XP055296199, Retrieved from the Internet: URL:https://www.researchgate.net/profile/Y ogendra_Reddy/publication/230918050_A_modu lar_power_electronic_transformer_for_mediu m_voltage_application/links/0fcfd506069047 985c000000.pdf?origin=publication_detail [retrieved on 2016-08-18]

## Beschreibung

Die Erfindung betrifft ein verteiltes Energie-Wandlungs-System.

### Hintergrund

Die Erzeugung, Verteilung und der Verbrauch unterschiedlicher Energieträger ist bekannt. Allerdings werden die Erzeugung, die Verteilung und auch der Verbrauch zunehmend komplexer.

Beispielsweise kann es durch die zunehmende Verwendung volatiler Energieerzeugungsanlagen (am Beispiel der Stromerzeugung), wie beispielsweise Wind- oder Photovoltaik-Anlagen, zu einer Über- oder Unterproduktion elektrischer Energie kommen, die durch die Kapazität oder die Speicherfähigkeit eines elektrischen Netzes nicht abgedeckt werden kann. Dieses Problem wird häufig als Speicherlücke des elektrischen Netzes bezeichnet.

Um diesem zu begegnen werden sogenannte "Smart Grids" vorgeschlagen. Die Vielzahl der aktuellen Smart Grid-Anwendungen und Entwicklungen konzentrieren sich in diesem Zusammenhang im Wesentlichen auf die alleinige Kontrolle von elektrischer Energieerzeugung und -verbrauch.

Im technisch übergeordneten Bereich (elektrisch) liegt das Hauptaugenmerk der Kontrollaufgaben auf der Frequenzhaltung, um die Stabilität der Netze gewährleisten zu können, während im Mittel- und Verteilnetzbereich auf die Einhaltung von Spannungsbändern fokussiert wird, sodass es nicht zu ungewollten Über- oder Unterspannungen bei den Verbrauchern kommt, die hierdurch geschädigt werden könnten. Hinzu kommen in der Regel ökonomische Aspekte, die eine Kontrolle von Energieerzeugung und -verbrauch (inklusive Speicherung) unter Marktaspekten vorsehen, wie z.B. im Bereich der Regelenergie oder bei der Einhaltung vertraglich zugesicherter Abgabe- oder Verbrauchsmengen.

Weitere Schwerpunkte die eine Kontrollbasis für Energiewandlungs- und Speichersystemen darstellen können, sind Aspekte wie die energieeffiziente Nutzung eines Systems, die Reduktion von Umweltbelastungen (z.B. CO₂-Emmissionen) u.a.

Aktuelle Entwicklungen im Bereich der sog. Smart Grids fokussieren auf zentral ausgerichtete Kontrollstrukturen. Damit sind solche Kontrollstrukturen gemeint, in denen eine Reihe räumlich verteilter Systeme durch ein Kommunikationsnetzwerk verbunden werden, um von einem zentralen Punkt aus alle notwendigen Kontrollentscheidungen für die beteiligten Systeme zu treffen.

Ein Kontrollansatz dabei ist z.B. eher planerischer Natur. Andere, alternative Kontrollansätze betreffen eher kurzfristige bzw. Realtime Kontrolle.

Aus dem Stand der Technik sind konventionelle Energie-Wandlungs-Systeme bekannt.

Dabei kann als eine Grundannahme angenommen werden, dass alle Energie-Wandlungs-Systeme auf dem ersten Hauptsatz der Thermodynamik und dem Energieerhaltungssatz basieren. Demnach werden spezifische Energieformen in technischen Systemen immer nur umgewandelt, eine Bilanzierung der dem System zu- und abgeführten Energiemengen ist stets 0.

Eine Vielzahl bisheriger Energie- bzw. Lastmanagementsysteme erlauben zwar eine zentral organisierte Energiefluss-Optimierung verteilter Systeme, eine übergeordnete und wahlweise zentral oder verteilt organisierte Optimierung von unterschiedlichen Energieformen, Energieträgern, Energiequellen und Energiesenken ist mit den bisherigen Ansätzen jedoch nicht oder nur unzureichend möglich.

Aus der US Patentanmeldung US 2015 / 112500 A1 ist ein Lastmanagementsystem auf Basis des Bedarfs bekannt.

Allerdings ist das Lastmanagement nur unzureichend geeignet die Herausforderung der Steuerung unterschiedlicher Energieträger in effizienter Weise bereitzustellen. Ähnliches gilt auch für das Erzeugersteuerungssystems.

Aus der EP 2 881 911 A1 ist ein anderes System bekannt, bei dem auf Basis eines starren Modells eine Steuerung bereitgestellt wird. Dabei wird auf Basis von Benutzereingaben eine benutzerinduzierte Funktionssteuerung bereitgestellt

Das System erweist sich jedoch als unflexibel und erlaubt nur in engen Grenzen eine Änderung des Netzes. Aufgrund der notwendigen Benutzereingriffe stellt sich das System als umständlich heraus. Zudem stellt sich das System insbesondere für dynamische Wechsel der Nachfrage und/oder des Angebotes als problematisch dar, da es ausschließlich auf Kosten basiert.

Die bisherigen zentralen Ansätze weisen Nachteile auf, die im Folgenden kurz skizziert werden sollen. So sind die bisherigen Kontrollansätze nicht Ausfall- oder Fehlertolerant. Insbesondere kann z.B. der (Teil-) Ausfall der Datenkommunikation zu einem Kontrollverlust über die beteiligten (Teil-) Systeme führen (single point of failure). Zudem steig mit der Anzahl der zu kontrollierenden Systeme die Komplexität der Kontrollaufgaben, die kaum oder nicht mehr zu beherrschen ist. Dabei ist festzustellen, dass der notwendige Datenverkehr zunehmend steigt und neben Kapazitätsproblemen auch zu einer zunehmenden Nutzung von Energie für die Kommunikation und die Verarbeitung der Daten führt. Somit ist insbesondere bei großen Anlagenaggregationen eine Echtzeit-Steuerung nicht mehr möglich. Korrespondierend hierzu steigt der Investitionsbedarf in die Datenübertragung- / Datenverarbeitungsinfrastruktur.

Zudem fehlt es aktuellen Kontrollansätzen an einer grundsätzlichen, automatisierbaren Adaptivität. Damit ist die Fähigkeit gemeint, ein zu kontrollierendes Energiewandlungssystem dynamisch unter die Kontrolle einer kontrollausübenden Einheit zu stellen (z.B. im Rahmen der Systemaggregation in einem verteilten virtuellen Kraftwerk), ohne dass das kontrollausübende System das konkret einzubindende System vorab "kennen" muss. Die Ursachen hierfür sind, dass für die Ausübung der Kontrolle (Informationsaustausch in Bezug auf Systemzustände / Messwerte, Übergabe von Vorgabewerten an ein System) in aller Regel auf Grundlage spezifischer, ggf. anwendungsbezogener und z.T. standardisierter Protokolle erfolgt (z.B. *Modbus RTU, Profibus, OPC UA, MBus, EEbus, IEC 61850*, *IEC 60870 u.v.m.).* In ihrer Form fokussiert ein Teil der genannten Protokolle lediglich auf eine serielle Übertragung von Mess- und Vorgabewerten. Dies erfordert sowohl bei den Sendern, als auch bei den Empfängern von Nachrichtenpaketen eine Abstimmung und Konfiguration in Bezug auf die Reihenfolge und das Format der übertragenen Informationen. Andere der genannten Protokolle stellen einen Standard für die Kommunikation in spezifischen Anwendungsgebieten dar, wie z.B. die IEC 60870-5-104 ("Anwendungsbezogene Norm für Fernwirkaufgaben in IP-Netzen"), das im Rahmen der Fernwirktechnik im Bereich der Infrastrukturautomation eingesetzt wird. Auch hier erfolgt in der Regel eine individuelle Konfiguration, so dass wiederum Sender und Empfänger von Nachrichten aufeinander abgestimmt werden müssen.

Im standardisierten, wie auch im nicht standardisierten Fall kann eine Kontrollaufgabe (z.B. zur Optimierung) demnach nur dann erfolgen, wenn die entsprechenden Parameter an der kontrollausübenden Einheit bekannt und entsprechend übersetzt werden. Darüber hinaus muss die Art des zu kontrollierenden Systems und die damit im Grundsatz verbundenen Flexibilisierungsmöglichkeiten in Bezug auf Energieerzeugung, -verbrauch und -speicherung bekannt sein, so dass diese entsprechend der Zielvorgaben gesteuert werden können.

Aktuelle Kontrollansätze erfordern hierzu einen nicht unerheblichen, manuellen (und somit im Sinne der Erfindung nicht adaptiven) Konfigurationsaufwand, der in der Regel in Bezug auf die Systemzusammensetzung statisch ist.

Es ist daher Aufgabe der Erfindung ein verbessertes verteiltes Energie-Wandlungs-System und dessen Komponenten bereitzustellen, das/die einen Nachteil oder mehrere Nachteile aus dem Stand der Technik vermeiden.

Die Aufgabe wird gelöst durch ein verteiltes Energie-Wandlungs-System gemäß Anspruch 1. Vorteilhafte Ausgestaltungen der Erfindung sind in den Unteransprüchen angegeben.

Nachfolgend wird die Erfindung unter Bezugnahme auf die anliegende Zeichnung anhand bevorzugter Ausführungsformen näher erläutert.

### Es zeigen

- Fig. 1: eine schematische Darstellung von Ausführungsformen der Erfindung nebst einem typischen Kommunikationsablauf,
- Fig. 2: eine weitere schematische Darstellung von Ausführungsformen der Erfindung,
- Fig. 3: eine zweite weitere schematische Darstellung von Ausführungsformen der Erfindung,
- Fig. 4: eine dritte weitere schematische Darstellung von Ausführungsformen der Erfindung,
- Fig. 5: eine mögliche Modellierung von Bewertungsebenen in einer Ausführungsform der Erfindung,
- Fig. 6: Varianten von Einsatzmöglichkeiten der Erfindung, und
- Fig. 7: Zusammenhänge zwischen Zuständen und Folgezuständen gemäß einer Ausführungsform der Erfindung.

Soweit nachfolgend in der Beschreibung der Figuren "ein" verwendet wird ist damit der unbestimmte Artikel jeweils gemeint und keine Festlegung auf genau einen Gegenstand. D.h. soweit nicht explizit angegeben ist mit "ein" auch immer der Plural umfasst.

Soweit nachfolgend Aspekte der Erfindung beschrieben werden, können diese wechselseitig in den unterschiedlichen Ausführungsformen verwendet werden, soweit nicht explizit nur als Alternative dargestellt.

Im Gegensatz zu bekannten Energie-Managementsystemen, die aufgrund Ihrer zentral ausgerichteten Kontrollstrukturen mit einem großen und kostenintensiven Systemaufbau und entsprechend vielen Teilkomponenten versehen werden müssen, erlaubt die Erfindung ein kompaktes, softwaretechnisches, standardisiertes, umfassendes, adaptives und kostengünstiges System zur Verfügung zu stellen, dass in der Lage ist, zunächst einzelne hybride (multimodale) Energiewandlungsprozesse zu steuern und dabei zusätzlich individuelle Optimierungsaufgaben zu erfüllen.

Auf Grundlage eines generellen, leistungs- und energiemengen-orientierten Ansatz kann die Erfindung sowohl für elektrische Energie, aber auch für andere Energieträger und -formen eingesetzt werden können. Hierdurch wird es ermöglicht, dass energieträgerübergreifende (multimodale) Flexibilisierungsmerkmale von Energiewandlungssystemen genutzt werden können, um unterschiedlichste Kontrollanforderungen und Ziele erfüllen bzw. erreichen zu können (technisch, ökonomisch oder ökologisch).

Durch eine einheitliche Beschreibung von Systemen, der Möglichkeit diese Beschreibung in Form einzelner Beschreibungsdateien zu speichern und somit automatisiert austauschen zu können, wird eine grundlegende Adaptivität bereitgestellt, die es erlaubt unterschiedlichste Energiewandlungsprozesse und Systeme miteinander zu kombinieren, ohne das die energietechnischen Fähigkeiten einzelner System a priori in ein (zentrales) Energiemanagementsystem integriert werden müssen.

Die Erfindung ermöglicht zudem, dass einzelne oder mehrere Systeme dynamisch in Aggregationen eingefügt oder entfernt werden können (z.B. innerhalb eines virtuellen Kraftwerks oder innerhalb sog. "Smart House"-Anwendungen).

Durch die einheitliche bzw. gleichartige Beschreibung von Energiewandlungssystemen durch die Erfindung wird ein Kontrollansatz geboten, der es erlaubt einen Energiewandlungsprozess vollends selbstbeschreibend zu machen. Dabei können die Variations- und Flexibilisierungsoptionen, die ein Energiewandlungsprozess bietet, auf gleichartige Parameter reduziert werden, die sich im Wesentlichen auf eine systematische Auswahl von Betriebszuständen und der konkreten Anwendung sog. Sollwertvariationen beschränken. Dabei können die hieraus resultierenden Systemzustände mit Hilfe der Erfindung sowohl energetisch qualitativ, als auch quantitativ beschrieben werden. Darauf basierend und unabhängig vom zu steuernden System, können darüber hinaus mithilfe von Bewertungs- oder Kostenfunktionen übergeordnete Optimierungsalgorithmen und -ansätze entwickelt werden, die sogar unabhängig vom konkreten Energiewandlungsprozess bzw. -system sein können.

Die Erfindung erlaubt aber auch die betrachteten Einzelsysteme oder auch Aggregationen von mehreren Einzelsystemen einer neuen organisatorischen Zugehörigkeit zur Verfügung stellen zu können. D.h., die Erfindung ermöglicht es, dass energiekonsumierende Systeme einerseits einem neuen Lieferanten dynamisch zugeordnet oder das energieproduzierende Systeme in die Planung eines Lieferanten dynamisch mit einbezogen werden können. Darüber hinaus können gleichfalls netzdienliche Systemeigenschaften ermittelbar sein, so dass unter Umständen verfügbare, netzstabilisierende Dienstleistungen von Systemen der organisierenden Einheit des Netzbetriebs zur Verfügung gestellt werden können.

Auf Basis des atomaren bzw. singulären Modellierungs- und Steuerungsansatz, der durch die Erfindung ermöglich wird, kann der Modellierungs- und Steuerungsansatz nicht nur im Bereich von parallel geführten Systemen zum Einsatz kommen, wie es z.B. im Bereich der elektrischen Stromversorgung der Fall ist, bei der z.B. Kontrollentscheidung in der Regel zeitlich parallel getroffen werden, so dass spezifische, zeitabhängige Kontrollziele verfolgt werden können (Stabilität, Energieeffizienz, Kostenoptimierung u.a.).

Im Gegensatz hierzu erlaubt es die Erfindung auch sequentiell betriebene Systemkonstellationen beschreiben und steuern zu können. Derartige Problemstellungen finden sich beispielsweise in industriellen oder verfahrenstechnischen Prozessen sowie im Bereich von Gas- und Wärmenetzen, bei denen der Zustand vorgelagerter Systeme direkte Auswirkungen auf die folgenden Systeme haben.

Durch die Möglichkeit verschiedene sog. Evaluationsstrategien zeitgleich und kompetitiv zueinander für ein einzelnes System Vorort auszuführen, können bereits Einzelsysteme dazu befähigt werden, um in einer "intelligenten" und flexiblen Weise auf verschiedenartige Optimierungsanforderung hin zu operieren. Die durch die Erfindung generierten Fahrplanalternativen können von den vor Ort eingesetzten Softwarekomponenten (z.B. von sog. Energie-Agenten) dazu genutzt werden, um aus den verschiedenen Möglichkeiten die situativ beste Alternative zu wählen.

Durch das durch die Erfindung bereitgestellte Wissens- und Handlungsmodel in Bezug auf einzelne Energiewandlungsprozesse und -systeme, wird gleichfalls eine künstliche Beschreibung geschaffen, die auch außerhalb realer Systemumgebungen verwendet werden kann. So erlaubt es die Erfindung im Rahmen von dynamischen Simulationen ein entsprechendes Modell eines Systems zur Verfügung zu stellen, so dass die technische Verhaltensweise realitätsnah und adäquat nachgebildet bzw. simuliert werden kann.

Weiterhin erlaubt die Erfindung neben einer umfassenden und atomar zu nutzenden Kontrollmöglichkeit für Einzelsysteme, gleichfalls die Möglichkeit komplexe Systemaggregationen zu beschreiben. Durch eine hierarchisierte und strikt gleichartige Modellierung der beteiligten Systeme (inkl. des zusammenfassenden bzw. übergeordneten Systems), kann eine Aggregation als echtes "System von Systemen" modelliert werden. Dies schließt die natürliche Aggregation eines Energienetzwerkes - wie z.B. ein elektrisches Verteilnetz mit ein.

Sämtliche Aspekte, wie die energetisch qualitative und quantitative Bewertung von Systemzuständen sowie die Anwendung anforderungsspezifischer Bewertungsfunktionen stehen durch die Erfindung analog zu Einzelsystemen gleichfalls zur Verfügung. Auch können mehrere Evaluationsstrategien parallelisiert und kompetitiv ausgeführt werden, so dass aus den resultierenden Ausführungsfahrplänen der situativ beste Fahrplan ausgewählt werden kann.

Zudem bietet die Erfindung eine Basis für Vergleichsmöglichkeit von zentralen, hierarchischdezentralen und vollends dezentralen Kontrollansätzen. Durch den modularen und auf Einzelsysteme fokussierten Aufbau der Erfindung, lassen sich unterschiedliche Kontrollansätze auf Basis gleichartiger und wiederverwendbarer Modelle realisieren, so dass entwickelte Kontrollansätze gegenübergestellt und verglichen werden können. Diese Form der Nutzung eignet sich besonders für Simulationen, aber auch für eine Anwendung in realen Systemen.

Demnach erlaubt die Erfindung auch die systematische und nachhaltige Entwicklung unterschiedlichster Kontrollansätze und dabei eine Kostenersparnis zu realisieren, da bereits modellierte Systeme und deren Kontrollansätze wiederverwendet werden können.

Zudem kann aufgrund seines systemischen Ansatzes und der hieraus resultierenden Charakteristik, die Erfindung gleichfalls als Entscheidungsunterstützungssystem betrachtet werden. Ausgehend von einem konkreten Systemzustand, zeigt die Erfindung die möglichen Konsequenzen einer Kontrollentscheidung auf (energietechnisch, quantitativ und qualitativ), so dass Entscheidungen aufgrund konkreter Zahlenwerte und/oder Systemzustände getroffen werden können. Dabei ist die Anwendung der Erfindung sowohl im Bereich von planerischen, als auch im Bereich einer Echtzeitkontrolle möglich.

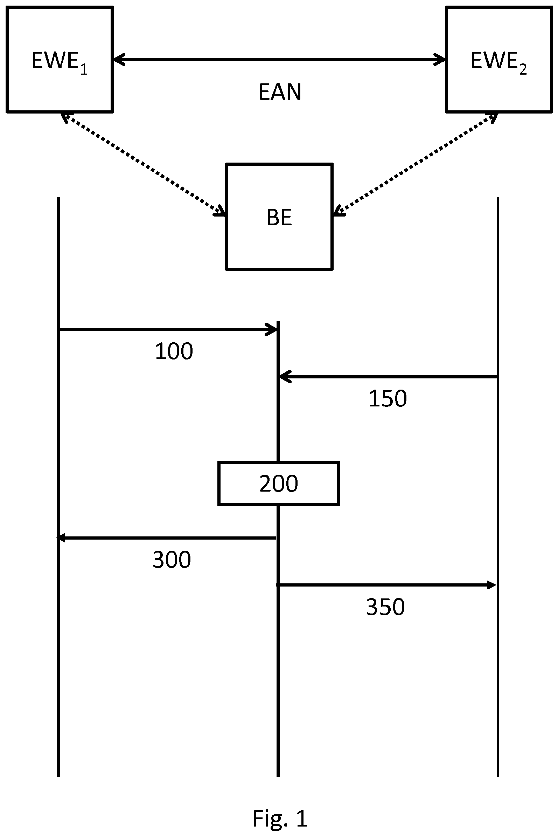

In allgemeinster Form soll nun das verteilte Energie-Wandlungs-System an Hand der Figur 1 beschrieben werden. Ein beispielhaftes verteiltes Energie-Wandlungs-System weist zumindest eine erste Energie-Wandlungs-Entität EWE₁ und eine zweite Energie-Wandlungs-Entität EWE₂ auf. Dabei ist zunächst festzustellen, dass der Begriff der Energie für die Modellbildung im Nachfolgenden jeden Träger einschließt, d.h. elektrische Energie ebenso wie z.B. chemisch gespeicherte Energie wie z.B. Gas oder Öl, thermische Energie, wie z.B. bei Erd- / Solar-Fernwärme, etc.

Zudem ist der Begriff Energie-Wandlungs-Entität weit gefasst. Im Prinzip fallen unter den Begriff sowohl Energie-Abnehmer als auch Energie-Versorger. Typische Energie-Abnehmer sind "Verbrauchselemente" wie z.B. Motoren während typische Energie-Versorger Gaserzeuger, Stromerzeuger, Wärmeerzeuger sind. Speicher können daher sowohl als Energie-Versorger im Entladezyklus agieren als auch als Energie-Abnehmer im Ladezyklus erscheinen. Ohne Beschränkung der Allgemeinheit kann aber angenommen werden, dass zu einem bestimmten Zeitpunkt, wenn ein Energiefluss auftritt, zumindest ein Abnehmer und zumindest ein Versorger vorhanden ist. D.h. mit der Erfindung ist es auch möglich unterschiedliche Energieträger substituierend füreinander zu steuern. D.h. abhängig von den Parametern / Daten kann zu einem Zeitpunkt ein bestimmter Energieträger sinnvoller sein als ein anderer. Somit erlaubt das System eine unerreichte Flexibilität.

Für die Erfindung wird weiter vorausgesetzt, dass die Energie zwischen den einzelnen Energie-Wandlungs-Entitäten über ein oder mehrere Energie-Austausch-Netze EAN ausgetauscht werden kann.

Obwohl die Erfindung für unterschiedliche Energieträger und/oder unterschiedliche Energie-Austausch-Netze für gleiche und unterschiedliche Energieträger Verwendung finden kann, wird nachfolgend zunächst nur der einfachste Fall beleuchtet werden.

In dem erfindungsgemäßen Energie-Wandlungs-System ist zudem mindestens eine Bewertungsentität BE vorgesehen, die mit den Energie-Wandlungs-Entitäten EWE₁, EWE₂ kommunizieren kann.

Kommunikation ist dabei weit gefasst und kann sowohl "interne Kommunikation" z.B. bei einem integrierten Aufbau - hierzu später mehr - oder ganz allgemein auch "externe Kommunikation" mit einer physikalisch getrennten Einheit umfassen. Insofern ist der hier beschriebene Ansatz eher dem zu Grunde liegenden logischen Modell geschuldet. Kommunikation kann dabei über jedes geeignete Medium stattfinden und ist nicht an ein bestimmtes Kommunikationsmittel gebunden. Insbesondere kann jedoch vorgesehen sein, dass die einzelnen Energie-Wandlungs-Entitäten als auch die Bewertungsentität BE über das Energie-Austausch-Netz EAN kommunizieren können, z.B. mittels Techniken wie Powerline.

Im Folgenden wird angenommen, dass die erste Energie-Wandlungs-Entität EWE₁ zu einem ersten Zeitpunkt als Energie-Versorgungs-Element, und die zweite Energie-Wandlungs-Entität EWE₂ als Energie-Abnahme-Element agieren. Zu einem weiteren Zeitpunkt kann dies wie bereits beschrieben anders sein, d.h. die erste Energie-Wandlungs-Entität EWE₁ zu einem weiteren Zeitpunkt als Energie- Abnahme-Element, und die zweite Energie-Wandlungs-Entität EWE₂ als Energie- Versorgungs-Element agieren.

Für die Planung werden nunmehr Daten der Energie-Wandlungs-Entitäten EWE₁, EWE₂ an die Bewertungsentität übermittelt. In aller Regel werden diese vor dem Beginn der Tatsächlichen Wandlung von Energie übermittelt. Es können jedoch auch aktuelle Daten und/oder Prognose-Daten übermittelt werden.

Nachfolgend wird angenommen, dass die erste Energie-Wandlungs-Entität EWE₁ Daten bezüglich der Bereitstellung von Energie der Bewertungsentität BE in einem Schritt 100 zur Verfügung stellt, wobei die Daten ein oder mehr aus dem aufweisen: Verfügbarkeitszeitraum, Verfügbarkeitsmenge, Kosten/Energieeinheit Schadstoffmenge/Energieeinheit, Speicherzustand für einen oder mehrere zukünftige Zeiträume.

Dabei ist die Art und Auswahl der Daten, die übermittelt werden kann, natürlich abhängig von der jeweiligen Energie-Wandlungs-Entität und/oder dem im Energie-Austausch-Netz verwendetem Träger. Beispielsweise könnte in einem Gas-Netz die zeitliche Durchflussmenge (z.B. m³/s) oder aber die Flussgröße Heizwert / Zeit (z.B. kWh/s bzw. kW) austauschbar übermittelt werden, sofern z.B. die Zustandszahl und Umgebungsparameter bekannt sind. Ausgetauscht werden z.B. Daten bezüglich eines Verfügungszeitraums, z.B. biete 30 kWh in einem Zeitraum von 1 h mit einer maximalen Flussmenge von 500 W. Zudem können natürlich auch weitere Daten, wie z.B. Messwerte am Gerät, Sollwerte des Gerätes, Anwendereingaben, etc. gleichfalls übertragen werden.

Nachfolgend wird angenommen, dass die zweite Energie-Wandlungs-Entität EWE₂ Daten bezüglich der Abnahme und/oder Verwendung und/oder Speicherung von Energie der Bewertungsentität BE in einem Schritt 150 zur Verfügung stellt, wobei die Daten ein oder mehr aus dem nachfolgenden aufweisen: Abnahmezeitraum, Abnahmemenge, Speicherzustand für ein, zwei oder mehr zukünftige Zeiträume.

Dabei ist die Art und Auswahl der Daten, die übermittelt werden kann, natürlich wiederum abhängig von der jeweiligen Energie-Wandlungs-Entität und/oder dem im Energie-Austausch-Netz verwendetem Träger. Beispielsweise könnte in einem Gas-Netz die zeitliche Durchflussmenge (z.B. m³/s) oder aber die Flussgröße Heizwert / Zeit (z.B. kWh/s bzw. kW) austauschbar übermittelt werden, sofern z.B. die Zustandszahl und Umgebungsparameter bekannt sind. Z.B. können Daten bezüglich des Abnahmezeitraums, z.B. benötige 30 kWh in einem Zeitraum von 1 h mit einer maximalen Flussmenge von 500 W ausgetauscht werden. Zudem können natürlich auch weitere Daten, wie z.B. Messwerte am Gerät, Anwendereingaben, etc. gleichfalls übertragen werden.

Ohne Beschränkung der Allgemeinheit können natürlich auch bestimmte Daten, wie z.B. Kennlinien, etc., in einer (nicht dargestellten) Speichereinrichtung oder Datenbank hinterlegt sein und ergänzend in Bezug auf eine Energie-Wandlungs-Entität von der Bewertungsentität erhalten oder abgefragt werden.

Nach Erhalt der Daten, die natürlich in jeder beliebigen Reihenfolge oder auch parallel bei der Bewertungsentität BE eintreffen können kann die Bewertungsentität BE eine Bewertung der zur Verfügung gestellten Daten in einem Schritt 200 vornehmen, um einen Fahrplan für die Abnahme von Energie zu erstellen.

Dieser Fahrplan kann dann in einem Schritt 300 bzw. einem Schritt 350 zeitgleich oder zeitlich nacheinander den beteiligten Energie-Wandlungs-Entitäten EWE₁, EWE₂ zur Verfügung gestellt werden.

Die vorbeschriebenen Funktionalitäten auf Seiten der Bewertungsentität BE als auch auf Seite der Energie-Wandlungs-Entitäten EWE₁, EWE₂ können jeweils rein in Software, Hardware oder kombinierter Soft-/Hardware verkörpert sein.

Insofern kann die logische Funktionalität der Energie-Wandlungs-Entitäten EWE₁, EWE₂ als auch der Bewertungsentität BE z.B. durch Energie-Agenten realisiert werden, die in den jeweiligen "physikalischen" Geräten, d.h. den Energie-Wandlungs-Entitäten EWE₁, EWE₂ enthalten ist, oder diesen zugeordnet ist. D.h. soweit nachfolgend auf Energie-Agenten abgestellt werde wird ist damit eine beispielhafte Implementierung der betreffenden Logik gemeint.

Mittels der Erfindung kann nunmehr auf den Fahrplan der Energienutzung und - Bereitstellung Einfluss genommen werden, in dem durch den Fahrplan Einfluss auf die systemimmanenten Parameter der Abnahme und/oder Verwendung und/oder Speicherung von Energie beispielsweise der zweiten Energie-Wandlungs-Entität EWE₂ genommen wird.

D.h. das vorgestellte Energie-Wandlungs-System erlaubt nicht nur eine Nachfragesteuerung sondern prinzipiell integriert sie dazu auch eine Erzeugersteuerung. Damit kehrt die Erfindung bisherigen Systemen, die entweder nur mittels einer Nachfragsteuerung oder nur mittels einer Nachfragesteuerung versucht haben, den Rücken und erlaubt eine weitaus effizientere und vielschichtigere Steuerung nicht nur eines Energieträgers, sondern einer Vielzahl von Energieträgern.

Am nachfolgenden Beispiel soll dies kurz erläutert werden.

Angenommen die erste Energie-Wandlungs-Entität EWE₁ sei eine Stromquelle, z.B. eine Windkraftanlage. Diese kann z.B. eine gewisse Energiemenge mit bestimmten Parametern in der Zeit bis Sonnenuntergang bereitstellen, da dann erfahrungsgemäß andere Energieabnehmer (z.B. Lampen) die Energie abnehmen. Ab Mitternacht sinkt jedoch die Abnahme dieser Verbraucher, sodass die Energie wieder für andere zur Verfügung steht.

Weiter angenommen die zweite Energie-Wandlungs-Entität EWE₂ sei eine Waschmaschine, die die einzelnen Waschschritte zeitlich verteilt strecken kann, beispielsweise ein erster Waschgang bei einer Temperatur X entsprechend einem ersten Stromverbrauch über einen ersten Zeitraum Z₁, nachfolgend einen Schleudergang entsprechend einem zweiten Stromverbrauch über einen zweiten Zeitraum Z₂, darauf folgend einen Spülgang entsprechend einem dritten Stromverbrauch über einen dritten Zeitraum Z₃.

Nunmehr kann die Bewertungsentität BE in Kenntnis dieser Daten einen Fahrplan erstellen, z.B. der Zeitraum Z₁ soll zum Zeitpunkt ZP₁ starten, sodass der Zeitraum Z₁ rechtzeitig vor Sonnenuntergang endet. Nach Mitternacht kann dann der Schleudergang (zweiter Zeitraum Z₂) beginnen. Dieser Fahrplan kann dann sowohl der Waschmaschine EWE₂ als auch der Windkraftanlage EWE₁ zur Verfügung gestellt werden.

In einem anderen Beispiel sei angenommen, dass ein Wäschetrockner sowohl mit Strom als auch Abwärme einer thermischen Solaranlage betrieben werden könnte.

Nunmehr kann z.B. abhängig vom (zu erwartenden) thermischen Angebot, vom Stromangebot als auch vom Gasangebot entschieden werden, welcher Energie-Träger wann verwendet wird. Z.B. kann zu Beginn eines Trockenvorganges starker Wind herrschen, sodass ein hohes Stromangebot vorhanden ist während anschließend eine hohe Solareinstrahlung zu einem entsprechenden thermischen Angebot führt. Nunmehr kann abhängig vom Angebot und der zu erwartenden Nachfrage der jeweilige Energie-Träger bzw. die jeweiligen Nutzungszeiträume bestimmt werden.

Dabei ist anzumerken, dass die Art der Energiewandlung sehr unterschiedlich sein kann. Grundsätzlich kann die Art der Energiewandlung in folgende (nicht-abschließende) Eigenschaften kategorisiert werden:

| | |
|---|---|
| Energie -verbrauch, -erzeugung oder -speicherung | Beispiele |
| konstant arbeitend | Glühbirnen, Geräte im Bereitschaftsbetrieb (Standby), Batterien, spezielle Arten von (Klein-) Kraftwerken |
| aufgaben abhängig | Weiße Ware (wie Waschmaschinen, Spülmaschinen usw.), |

| | Industriebetriebe (z.B. bei Anfahr- und Abfahrprozesse) usw. |
|---|---|
| umgebungsabhängig | Windkraft- und Photovoltaikanlagen |
| repetitiv | Kühlschränke, Zentralheizungen, µKWK-Anlagen |
| dynamisch regelbar | Speicherkraftwerke, Gas-Kraftwerke, Gasturbinen, Kompressoren, Gas-Speicher, u.a. |

Dabei ist weiter anzumerken, dass technische Systeme nicht ausschließlich auf eine einzige Art und Weise Energie nutzen oder erzeugen können. Vielmehr können, abhängig vom aktuellen Betriebszustand eines Systems, mehrere Arten der Energienutzung bereits in einem einzigen System auftreten. Entsprechend ist eine Differenzierung nach möglichen Betriebszuständen unerlässlich.

Energieflüsse können von äußeren Gegebenheiten oder spezifischen Systemeinstellungen abhängen. Dies gilt beispielsweise für umgebungsabhängige Systeme wie Windkraft- oder Photovoltaikanlagen, die abhängig von der aktuellen Wetterlage und der Position der Sonne Energie erzeugen. Dies trifft aber auch auf dynamisch regelbare Systeme zu, die abhängig von entsprechenden Vorgabewerten (Set Points) Energie erzeugen oder verbrauchen. Eine weitere beispielhafte Aufgabe ist es somit die individuellen, systemspezifischen Parameter technischer Systeme auf eine einheitliche Datenbasis zu transformieren, um hieraus resultierende Energieflüsse bestimmen zu können. Wie bereits erwähnt, bilden zeitabhängige Energieflüsse und die daraus resultierenden Energiemengen hierzu eine geeignete Grundlage, die jedoch nach Art des verwendeten Energieträgers, wie z.B. Strom oder Gas, differenziert und bewertet werden müssen. Entscheidend ist dabei, dass das resultierende Modell in der Lage ist, das zeitliche Verhalten und somit die inhärente Dynamik der technischen Systeme abbilden zu können.

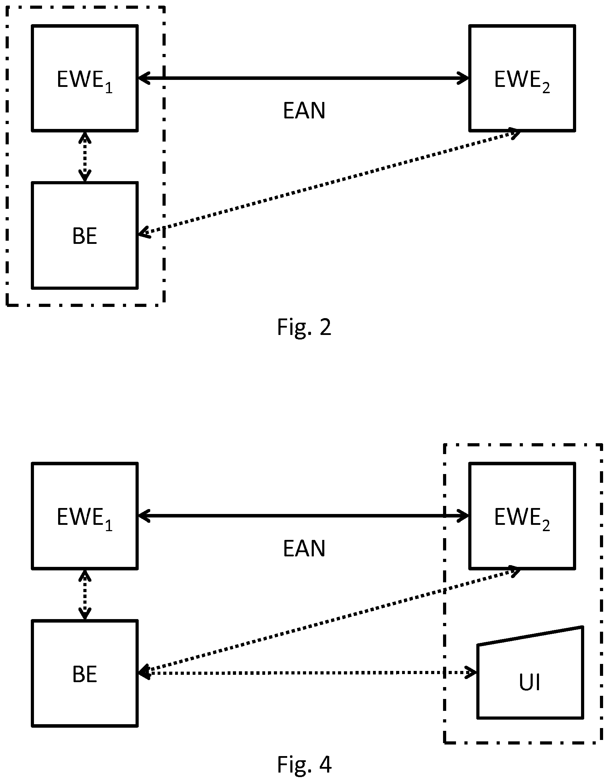

Dieses logische Modell kann nunmehr auch dadurch verkörpert sein, dass die Bewertungsentität BE, wie in Figur 1 logisch dargestellt, auch physikalisch getrennt von den Energie-Wandlungs-Entitäten EWE₁, EWE₂ ist. Beispielsweise kann die Bewertungsentität in einer eigenen Steuerzentrale einer Haus- oder Maschinensteuerung oder aber auch Teil sogenannter Smarter Geräte oder Einrichtungen wie z.B. Smart-Meters, sein. Insofern kann wie in Figur 2 gezeigt die Bewertungsentität BE beispielsweise in die Energie-Wandlungs-Entitäten EWE₁ integriert sein. Der Datenaustausch zwischen der logischen Energie-Wandlungs-Entität EWE₁, d.h. zwischen dem Energie-Agenten der Energie-Wandlungs-Entität EWE₁ und der Bewertungsentität BE kann dann z.B. über eine (interne) Kommunikationsschnittstelle stattfinden.

Es kann jedoch auch sein, dass die Bewertungsentität BE Bestandteil der ersten Energie-Wandlungs-Entität EWE₁ und/oder Bestandteil der zweiten Energie- Wandlungs-Entität EWE₂ ist, denn das logische Modell setzt keine klare Lokalisierung einer Bewertungsentität voraus. Darüber hinaus sollte auch verstanden sein, dass eine Energie-Wandlungs-Entität EWE₁, EWE₂ durchaus auch mit mehreren Bewertungsentitäten BE verbunden sein kann und auch mit mehreren Bewertungsentitäten BE Daten austauschen kann.

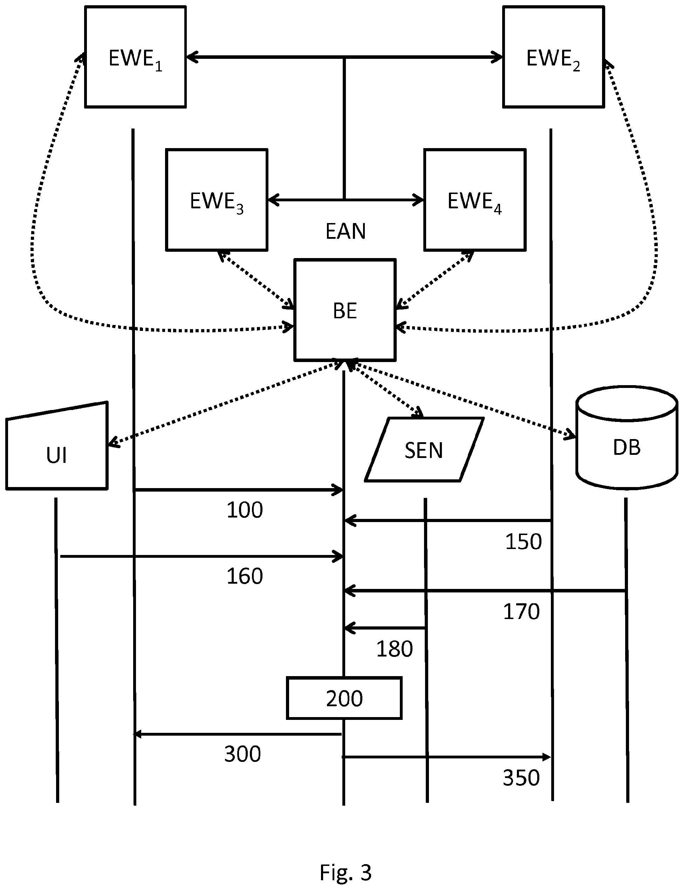

Ohne Beschränkung der Allgemeinheit können in einem Energie-Austausch-Netz EAN auch mehrere Bewertungsentitäten vorgesehen werden. Zudem kann auch wie in Figur 3 gezeigt das Energie-Austausch-Netz EAN weiträumiger sein und mehr als die bisher beschriebenen Energie-Wandlungs-Entität EWE₁, EWE₂ besitzen, wobei die Angabe von Energie-Wandlungs-Entität EWE₃, EWE₄ lediglich beispielhaft ist.

Je nach Ausgestaltung der Energie-Wandlungs-Entitäten EWE₁, EWE₂ kann z.B. auch vorgesehen sein, dass von der Bewertungsentität Alternativen, d.h. alternative (Ausführungs-) Fahrpläne, zur Verfügung gestellt werden. Dann kann es sinnvoll sein, dass die jeweilige Energie-Wandlungs-Entität EWE₁, EWE₂ an Hand anderer Kriterien entscheidet, ob sie eine oder keine der Alternativen wählt. Diese Entscheidung kann anschließend der Bewertungsentitäten BE mitgeteilt werden.

Unabhängig von der Art des betrachteten Systems, können Daten oder Informationsquellen für die weitere Verarbeitung oder zur Steuerung eines Systems wie folgt differenziert werden:

### Interne statische Informationen

Mit dieser Kategorie können individuelle Informationen bzw. Datenmodelle erfasst werden, die ausschließlich für einzelne Systeme oder für einen Typus von System relevant sind. Hierzu könnten in einem einfachen Fall zum Beispiel die programmabhängigen Verbrauchsdaten einzelner Waschmaschine oder eines Trockners gehören. Denkbar sind aber auch weitaus komplexere Datenmodelle, wie beispielsweise Kennfelder und weitere Parametersätze, die Systeme wie Generator-Dampfturbinen, Kompressoren oder Verbrennungsmotoren beschreiben. Die informationstechnische Gemeinsamkeit liegt dabei darin, dass die für eine weitere Berechnung notwendigen Grundinformationen zu einem technischen System durch statische Modelle erfasst werden können.

### Flexibilitätsinformationen

Dieser Typus kann die Informationen umfassen, die über einen externen Eingriff am technischen System beeinflusst werden können und die somit die Energieflüsse an den Grenzen des Systems verändern. In der praktischen Anwendung können dies die Sollwerte der Systemreglung sein, die durch eine externe Kontrolleinheit (wie z.B. dem Energie-Agenten) und unter Zuhilfenahme entsprechender Kommunikationsprotokolle automatisiert verändert werden können. In Abgrenzung zur nächsten Gruppe der End-Benutzer-Daten, kann dieser Typus in der Regel keine Veränderungen durch einen End-Anwender zulassen.

### End-Anwender Variabilität

In dieser Gruppe können die Informationen zusammengefasst werden, die von einem End-Anwender verändert oder vorgegeben werden können. Dies kann beispielsweise eine gewünschte Raumtemperatur oder ein vorgegebenes Raumtemperaturprofil für einen Tag sein. Im Gegensatz zu den vorab beschriebenen Flexibilitätsinformationen, können die Informationen dieser Gruppe zunächst nicht durch automatisierte Kontrollprozesse veränderbar sein.

### Umgebungsinformationen

Viele technische Systeme, wie z.B. Windkraft- und Photovoltaik-Anlagen, hängen von der aktuellen Wettersituation und somit von Ihrer Umgebung ab. Diese sind unter Umständen jedoch nicht über die Sensorik des technischen Systems selbst erfassbar, so dass die Konsultierung externe Datenquellen und Dienste notwendig sein kann, um die Informationen systemintern zu nutzen.

### Systemzustandsinformationen

Diese Gruppe kann zunächst die systemspezifischen Sensorinformationen und somit die Messwerte umfassen, die an einem technischen System verfügbar sind. Weiter können in diese Gruppe die aktuellen Sollwerte der Systemreglung und, insofern eine diesbezügliche Abhängigkeit besteht, entsprechende Umgebungsinformationen, gehören. Typischerweise erfolgt zur Erfassung dieser Informationen ein rein lesender Zugriff auf die Informationsgeber und -quellen.

Insbesondere kann in einer Weiterbildung der Erfindung vorgesehen sein, dass auch Topologie-Daten und/oder Systemzustände des Energie-Austausch-Netz EAN der Bewertungsentität BE zur Verfügung gestellt werden, wobei die Topologie-Daten und/oder Systemzustände bei der Bewertung mitberücksichtigt werden. Diese Topologie-Daten können entweder extern zur Verfügung gestellt werden (Push) und/oder aus einer Datenbank DB und/oder mittels anderer Dienste wie z.B. einem Web-Service - wie in Figur 3 angedeutet - abgefragt werden (Pull).

Dies ist z.B. dann besonders wertvoll, wenn die Leitungskapazitäten beschränkt sind, sodass zwar im Prinzip z.B. mehrere Quellen Energie einspeisen oder Senken Energie abnehmen könnten, jedoch das Energie-Austausch-Netz z.B. stark in der Kapazität schwankt.

Zudem kann hiermit auch sichergestellt werden, dass z.B. die Frequenz in einem Wechselspannungsnetz stabil innerhalb von Vorgabeparametern gehalten wird.

Dies ist aber auch dann besonders wertvoll, wenn Energie-Senken EWE₁, EWE₂ oder Energie-Quellen EWE₁, EWE₂ in Bezug auf das Energie-Austausch-Netz EAN ortsvariabel sind. Beispielsweise wird gegenwärtig immer wieder diskutiert die Speicher von Elektrofahrzeugen als Zwischenspeicher zu verwenden.

Zudem kann vorgesehen sein, dass ein Benutzer einer Energie-Wandlungs-Entität Daten in Bezug auf diese Energie-Wandlungs-Entität EWE₁, EWE₂ eingeben kann. Eingeben bedeutet in diesem Zusammenhang, dass der Benutzer selbst die Daten vorgibt, z.B. eine gewünschte Solltemperatur, eine gewünschte Dauer, etc. Eingabe umfasst dabei jegliche Form einer Eingabe, z.B. eine direkte Eingabe an der betroffenen oder einer anderen Energie-Wandlungs-Entität EWE₁, EWE₂, eine direkte Eingabe an der Bewertungsentität BE, oder aber eine Eingabe über eine entfernte Anwendung, z.B. eine Telefon-App oder einen Web-Dienst. Eine derartige Eingabe kann z.B. wie in Figur 3 angedeutet mittels eines User Interfaces UI in einem Schritt 160 realisiert sein. Diese Daten können dann in gleicher Weise bei der Bewertung berücksichtigt werden. Das User Interface UI kann aber auch wie in Figur 4 gezeigt Bestandteil einer Energie-Wandlungs-Entität, hier Energie-Wandlungs-Entität EWE₁, sein.

Bereits zuvor wurde auf die Möglichkeit der Einflussnahme durch Sensordaten verwiesen. So kann auch vorgesehen sein, dass Umgebungsdaten der Bewertungsentität BE in einem Schritt 180 entweder extern zur Verfügung gestellt werden (Push) und/oder von einem oder mehreren Sensoren SEN - wie in Figur 3 angedeutet - abgefragt werden (Pull).

Zudem kann vorgesehen sein, dass Prognose-Daten in einem Schritt 170 extern der Bewertungsentität BE zur Verfügung gestellt werden (Push) und/oder von einem oder mehreren Datenbanken DB - wie in Figur 3 angedeutet - abgefragt werden (Pull).

Prognosedaten stellen in aller Regel zeitlich vorwärts gerichtet Informationen von bereits definierten Systemvariablen dar. Die Erfindung bietet für einzelne Systemvariablen beispielhaft zwei Möglichkeiten an, um Prognosedaten für die Evaluation zur Verfügung zu stellen. Hier lassen sich einerseits statische Prognose-Messreihen hinterlegen. Alternativ oder zusätzlich kann jedoch auch vorgesehen sein, Prognosedaten mathematisch zu bestimmen oder von einem externer Dienstleister, wie z.B. einem Wetterdienst, abzufragen.

Obwohl bisher die Effizienz der Energieverteilung im Vordergrund gestanden hat kann es zusätzlich vorgesehen sein, dass zu Kontrollzwecken und/oder Abrechnungszwecken auch Nutzerdaten bzw. Identifikationsdaten einer Energie-Wandlungs-Entität EWE₁, EWE₂ mit ausgetauscht werden. Hierdurch kann z.B. auch die Funktionalität für eine Abrechnung von Energieflüssen verwirklicht werden, wobei hier der Begriff der Abrechnung weit zu fassen ist und z.B. Emissionswerte oder dergleichen mit umfassen kann. Ohne weiteres kann daher die Bewertungsentität BE daher auch als Ziel haben die Kosten im Sinne der Abrechnung zu optimieren.

Werden allgemein formuliert "Kosten" zur Ermittlung eines operationalen Optimums gewählt, ist zunächst die Kosteneinheit zu definieren, mit dessen Hilfe diese Kosten zusammengefasst werden sollen. Hier kommen zu einen monetäre Einheiten in Betracht. Darüber hinaus sind jedoch auch andere Kosteneinheiten denkbar, die die operationale Nutzung eines Systems äquivalent beschreiben können. Anwendbar sind hier beispielsweise die produzierten oder eingesparten Mengen an Kohlendioxid (CO₂), die mit entsprechend formulierten Kostenfunktionen dazu genutzt werden könnten, um die umgesetzten Energiemengen eines technischen Systems entsprechend zu bewerten. Kosten- bzw. Umrechnungseinheiten können somit beispielsweise in "Euro je kWh" oder in "Tonnen CO₂ je MWh" angegeben werden. Entsprechend der gewählten Kosteneinheit und den Ausführungen zum 1. Hauptsatz der Thermodynamik, können demnach die durch ein technisches System zeitlich umgesetzten Energiemengen, die Grundlage für dessen operationale Bewertung bilden. Entsprechend des genutzten Energieträgers und der systembezogenen Flussrichtung, sind hier jedoch unterschiedliche und z.T. zeitlich abhängige Kostenfunktionen anwendbar. Als Beispiele seien an dieser Stelle Demand Response-Ansätze, die sich unterscheidenden Vergütungssätze für die Entnahme oder die Einspeisung der elektrischen Energie eines Prosumers oder die Anbindung eines technischen Systems an unterschiedliche Netze genannt.

Ergänzend zu einer auf Energieträger und -mengen bezogenen Bewertung, können für die operationale Optimierung eines technischen Systems jedoch auch weitergehende Zusammenhänge relevant sein. So ist es beispielsweise denkbar, dass auch Installations- oder Wartungskosten sowie Abschreibungen in die Bewertungen einfließen oder dass Betriebszustände, wie Stillstand, An- und Abfahrvorgänge, spezifisch bewertet werden müssen. Die hieraus resultierenden Kosten oder Erträge sind folglich den Energiemengenbezogenen Kosten hinzuzurechnen.

Trotz der hieraus resultierenden hohen und unter Umständen stark differierenden Anforderungen an eine Kostenmodellierung zur operationalen Bewertung technischer Systeme, ist es ein Ziel der durch die Erfindung angebotenen Struktur, größtmögliche Flexibilität zu bieten, um die Anwendung unterschiedlicher Bewertungsansätze zu unterstützen. Entsprechend ist die Systematik zur Berechnung der Kosten oder Erträge für einen durch das Modell definierten Betriebszustand darauf ausgelegt, die Teilergebnisse verschiedener Berechnungsschritte und -verfahren miteinander zu kombinieren und aufzusummieren. Die Grundlage hierzu kann eine Zustandsbeschreibung eines technischen Systems bilden, die die Energieträger-abhängigen Energieflüsse an den Netzanschlüssen eines technischen Systems für einen definierten Zeitraum erfasst. Differenziert nach einströmender bzw. ausströmender Nutzenergie und nach der Art des Energieträgers, können jeweils einzeln definierte Kostenfunktionen dazu verwendet werden, um den Energieumsatz in einen Betriebszustand preislich zu bewerten. Die Summe der auf die Energieflüsse bezogenen Aufwendungen oder Erträge kann dabei den ersten Aspekt zur operationalen Bewertung einzelner, zeitlich begrenzter Betriebs- und Systemzustände darstellen.

Ohne weiteres kann in dem System der Erfindung auch vorgesehen sein, dass Nutzerdaten bezogen auf die zweite Energie-Wandlungs-Entität EWE₂ der Bewertungsentität BE zur Verfügung gestellt werden, wobei die Daten Benutzervorgaben, für einen oder mehrere zukünftige Zeiträume aufweisen. Beispielsweise kann damit realisiert werden, dass ein Benutzer angibt, dass ein bestimmter Vorgang bis zu einem bestimmten Termin erledigt ist, z.B. Autobatterie / Laptop-Akku bis morgen früh 6 h laden.

Ohne weiteres kann in dem System der Erfindung auch vorgesehen sein, dass Nutzerdaten bezogen auf die erste Energie-Wandlungs-Entität EWE₁ der Bewertungsentität BE zur Verfügung gestellt werden, wobei die Daten Benutzervorgaben für einen oder mehrere zukünftige Zeiträume aufweisen. Beispielsweise können so Wartungsintervalle mitgeteilt werden.

Zudem kann vorgesehen sein, dass Prognose-Daten bezogen auf zumindest eine der Energie-Wandlungs-Entitäten EWE₁, EWE₂ der Bewertungsentität BE zur Verfügung gestellt werden, wobei die Daten ein oder mehr aus dem nachfolgenden aufweisen: Energieerzeugung bzw. -nutzung, Speichervolumen und -zustand für einen oder mehrere zukünftige Zeiträume.

Die Ziele für die Steuerung eines verteilten Energie-Wandlungs-Systems bzw. eines oder mehrerer einzelner Energie-Wandlungs-System können unterschiedlicher Natur sein. So können sowohl die zu betrachtenden Zeitspannen als auch die Bewertungsmaßstäbe für die umgesetzten Energiemengen differieren. Mit dem hier vorgestellten Ansatz der Erfindung können sowohl kurzfristige Entscheidungen, z.B. für die "schnelle" Stabilisierung eines Ortsnetzes im Sekunden- und Minutenbereich herbeigeführt werden können, aber auch mittel und längerfristige Planungen, die über einen Zeitraum von mehrere Stunden oder Tagen reichen. Dabei kann das Modell im Prinzip die Verfolgung unterschiedlicher Zielsetzungen unterstützen. Abhängig von diesen Zielen können bestimmte Informationen vorteilhaft sein, die im Rahmen einer Zustandsraumevaluation Anwendung finden können. Entsprechend der durch die Erfindung ermöglichten Zielsetzungen, werden diese bestimmten Informationen nachfolgend identifiziert und kurz erläutert:

### Kurzfristige Stabilisierung von Systemzusammenschlüssen

Um rein technisch auf kurzfristige Ereignisse reagieren zu können und dabei die Energieflüsse eines Systems anzupassen, werden idealerweise nur die Informationen benötigt, die bereits erfasst werden. Abhängig vom aktuellen Systemzustand, der ebenfalls die aktuellen Energieflüsse umfasst, und den Flexibilisierungsmöglichkeiten, die durch das Basismodell beschreiben werden, können alternative Ausführungsfahrpläne ggf. direkt erstellt werden. Im Falle umgebungsabhängiger Systeme, können jedoch zusätzliche Prognose-Informationen vorteilhaft sein, die es so beispielsweise erlauben die Energieerzeugung von Photovoltaik- und Windkraftanlagen vorherzubestimmen. Gleiches gilt aber auch für Sollwerte, die durch den Benutzer eines Systems vorgegeben werden können, wie z.B. ein Tagestemperaturprofil für eine Heizungsanlage. Demnach ergibt sich die Vorteilhaftigkeit zur Bereitstellung von Prognosen immer dann, wenn im Modell (definierte) Messwerte oder Benutzervorgaben als Ausgang- und Berechnungsparameter für die Bestimmung von Energieflüssen dienen; entsprechend können diese Prognosen evaluationsvorbereitend für den betrachteten Zeitraum zur Verfügung stehen.

### Energieeffizienz

Richten sich die Planungen zu einem technischen System auf die Erreichung eines Ziels mit minimalem Energieaufwand, bietet die Erfindung die hierzu benötigten Informationen über die Ein- und Ausgangsinformationen, das Basismodell sowie der Möglichkeit der zeitlichen Zustandsbeschreibung eines technischen Systems an. Mit Hilfe der kumulierten Energieaufwände lässt sich die an einer Schnittstelle und über die Zeit transportierte Energiemenge fortschreiben. Ergänzend hierzu kann aber auch der Energieverlust von Interesse sein, der sich aus dem aktuellen Wirkungsgrad eines Systems ergibt. Hierzu bietet sich im Laufe des Evaluationsprozesses die Möglichkeit auch diese Werte über die Zeit zu summieren. Analog zu den Ausführungen zur kurzfristigen Stabilisierung von Systemzusammenschlüssen, können für diese Optimierungsziele ebenfalls Prognosen von Mess- und Vorgabewerten vorteilhaft sein.

### Kostenoptimierung

Auch dieses Optimierungsziel erfordert zunächst eine Betrachtung des aktuellen Betriebszustandes sowie eine Bestimmung der zeitlich kumulierten Energiemengen. Allgemein formuliert erfordert eine auf Kosten ausgerichtete Optimierung jedoch zusätzlich die Definition eines geeigneten Kostenmodells, das die zeitlich verbrauchten oder erzeugten Energiemengen unter Zuhilfenahme geeigneter Kostenfunktionen unterhalb einer gemeinsamen Kosteneinheit zusammenfasst. Analog zu Prognosewerten können auch diese Informationen für den betrachteten Optimierungszeitraum zur Verfügung stehen und können sich dabei ebenfalls über die Zeit hinweg ändern.

Es bleibt anzumerken, dass die Bewertungseinheit BE auch mehr als ein Ziel verfolgen kann, wobei es dabei zu einer Gewichtung der Ziele kommen kann, die wiederum abhängig sein kann von Benutzervorgaben oder aber anderen Parametern.

### Schrittweise Grundsystematik zur Evaluation technischer Systeme

Abhängig vom beschriebenen System, können unterschiedliche Betriebszustände sowie die hierin enthaltenen Variationen von Sollwerten dazu führen, dass sich für einen Zeitpunkt eine Vielzahl unterschiedlicher Systemzustände einstellen.

Betrachtet man den Evaluationsprozess im Schritt 200 als zeitlich vorwärts gerichtete, systematische Suche nach einem optimierten Fahrplan, können mit Hilfe der durch die Betriebszustände beschriebenen Zeitschritte, verschiedenste Zustände eines technischen Systems ermittelt werden.

Zur besseren Differenzierung können hier insgesamt fünf Ebenen unterschieden werden, die innerhalb einer Evaluationsstrategie ihre Anwendung finden können.

Dabei sei angemerkt, dass der nachfolgende Bewertungsprozess 200 lediglich beispielhaft beschrieben ist und Variationen und Änderungen ohne weiteres möglich sind.

Die erste Ebene stellt ein Basismodell dar, das alle systembeschreibenden Parameter umfassen kann. Hierzu können die genannten internen und externen Informationsquellen sowie Anschlusskonfigurationen, Netzanschlüsse, involvierte Energieträger, Betriebszustände Betriebszustandsübergänge und Energieträger-abhängige Energieflüsse, usw. gehören. Alle weiteren Ebenen bedienen sich der hier zur Verfügung gestellten Informationen. Die zweite Ebene bietet Antworten in Bezug auf die mögliche Flexibilität eines technischen Energiewandlungsprozesses. Abhängig vom augenblicklichen Zustand eines Systems, kann hiermit die Frage beantwortet werden, welche Systemzustände sich per Definition als Folgezustände einstellen lassen könnten. Mit der dritten Ebene kann die Systematik einen Suchgraphen zur Verfügung stellen, der es ermöglicht den bereits ermittelten Zustandsraum abzubilden und dabei ermittelte Energieflüsse und hierzu korrespondierende Kosten wiederzuverwenden. Die vierte Ebene bietet Unterstützung in Bezug auf zeitliche Restriktionen sowie auf mögliche Speicherzustände, so dass die finale, fünfte Ebene die fertiggestellten Ergebnisfahrpläne repräsentieren kann. Im Folgenden werden die hier nur kurz umschriebenen Ebenen ausführlicher erläutert.

### 2. Ebene - Zustandsvariabilität

Auf Grundlage des Basismodells und der definierten Ein- und Ausgangsinformationen, kann sich die Frage, welche Flexibilität ein technisches System zur Verfügung stellt und wie diese im Rahmen einer automatisierten Evaluation genutzt werden kann, auf im Wesentlichen zwei Aspekte reduziert werden. Dies ist auf der einen Seite ein möglicher Wechsel des Betriebszustands, der über den entsprechenden Graphen des Basismodells beschrieben wird. Auf der anderen Seite können in einem Betriebszustand aber auch die Vorgabe- bzw. Sollwerte der Reglung des Systems änderbar sein, so dass sich hierüber weitere Zustandsänderungen am System herbeiführen lassen. Zusammenfassend können diese beiden Aspekte hier als "Zustandsvariabilität" bezeichnet werden.

Die Beschreibung dieser Variabilität kann an dieser Stelle der Grundsystematik unabhängig vom konkreten Zeitpunkt in dem das System betrachtet wird, aber auch unabhängig von zeitlichen Restriktionen oder maximal möglichen Speicherzuständen betrachtet werden. Da sich die Frage, welche möglichen Zustände ein System im nächsten Zeitschritt annehmen kann, über den kompletten Evaluationszeitraum immer wieder stellen kann, kann direkt zu Beginn einer Evaluation ein entsprechender Graph erstellt werden, der im Laufe des Evaluationsprozesses und entsprechend des aktuellen Systemzustands abgefragt werden kann. Dabei lässt sich der gerichte Graph für die Zustandsvariabilität wie folgt beschreiben:
*G_{ZV} = (V, E)* beschreibt einen gerichteten Graphen für die Zustandsvariabilität eines technischen Systems, wobei die Knoten *V* die endliche Menge aller Betriebszustands- und Sollwert-abhängigen Zustände eines Systems beschreibt und *E,* die Kanten des Graphen, die endliche Menge aller möglichen Übergänge zwischen diesen Zuständen. Zur Konstruktion dieses Graphen wird zunächst der für die Evaluation definierte Initialzustand des Systems genutzt, um den ersten Knoten des Graphen zu erstellen. Mit Hilfe der in einem Basismodell definierten Betriebszustandsübergänge werden anschließend mögliche Folgezustände ermittelt. Dabei ist zu beachten, dass es durch eine Variation von Sollwerten zu einer Multiplikation der möglichen Folgezustände kommen kann. Ausgehend von einem aktuellen Sollwert, der für diese Systemvariable definierten Diskretisierung und des dafür festgelegten Gradienten, können für einzelne Sollwerte die möglichen Folgewerte leicht bestimmt werden. In der Kombination mehrerer Sollwerte ergibt sich die Gesamtmenge an möglichen Folgezuständen jedoch aus dem Kreuzprodukt aller einzelnen Sollwertvariationen. Sind die Folgezustände für einen Zustand ermittelt, werden hierzu korrespondierende Knoten erstellt. Im weiteren Verlauf kann diese Vorgehensweise rekursiv auf einen oder mehrere Folgezustände angewendet werden, bis die zugehörigen Betriebszustands- und Sollwertvariationen des technischen Systems ermittelt und abgebildet worden sind. Zur Wiedererkennung bereits ermittelter Knoten, kann ein einfaches Hashverfahren angewendet werden, das als Grundlage den aktuellen Betriebszustand sowie die aktuellen Sollwerte verwendet. Die daraus resultierende Menge an Knoten ist stark abhängig vom betrachteten System, stellt jedoch keine größeren Herausforderungen in Bezug auf Speicherbelastung oder Performance dar. Sie kann in der nächsten Ebene der Grundsystematik jedoch die erneute Instanziierung und Durchführung der hier beschriebenen Vorgehensweis zur Bestimmung von Folgezuständen ersparen.

### 3. Ebene - Zustandsraum eines Systems

Im weiteren Verlauf der Evaluation, könnten Systemabfolgen nun analog zur beschriebenen Vorgehensweise gewählt und der Gesamtsystemverlauf entsprechend fortgeschrieben werden. Der Nachteil dieser Vorgehensweise ist jedoch, dass eine Entscheidung, die ausschließlich auf Grundlage des möglichen Betriebszustands und der möglichen Sollwerte getroffen wird, keine Informationen über die Konsequenzen dieser Entscheidung enthält. Entsprechend sind zielgerichtete Entscheidungen an dieser Stelle nur sehr schwer oder gar nicht zu treffen und erfordern letzten Endes eine sehr zeitaufwändige Suche nach einem geeigneten bzw. optimierten Fahrplan für ein technisches System. Besonders in Fällen in denen die Berechnungsprozesse zu einem System aufwändig sind und ein hohes Maß an Flexibilität vorhanden ist, wird die kurzfristige Suche nach einem geeigneten alternativen Ausführungsplan den zeitlichen Anforderungen höchstwahrscheinlich nur schwer gerecht werden können.

Der zu diesem Problem entworfene Lösungsansatz wird durch die hier beschriebene 3. Ebene der Grundsystematik adressiert. Grundlage hierzu bildet die bereits beschriebene eindeutige Identifikation des Zustands eines technischen Systems. Diese kann in dieser Ebene dazu verwendet werden, um einen Differenzengraphen aufzubauen, der die möglichen Zustände eines technischen Systems über die Zeit beschreibt. Die Knoten dieses Graphen können dabei die zeitlichen Systemzustände mit allen Ein- und Ausgabewerten sowie die zu diesem Zeitpunkt anliegenden Energieflüsse an den Netzanschlüssen des technischen Systems beinhalten.

Ist das zeitliche Verhalten eines technischen Systems auf Grundlage des Modells zu beschreiben, kann zunächst der Anfangs- bzw. Ausgangszustand zu identifizieren sein. In einem realen System kann dies beispielsweise durch die Erfassung aktueller Messwerte und Energieflüsse erfolgen. Im Kontext wird dies allgemein durch die evaluationsvorbereitenden Einstellungen vorgegeben. Mit dem definierten Ausgangszustand steht eine zeitpunktgenaue und vollständige Beschreibung aller Zustandswerte zur Verfügung. Hierzu können (alle) Ein- und Ausgangsinformationen (inklusive aktualisierter Prognosewerte), alle zum konkreten Zeitpunkt anliegenden Energieflüsse an den Anschlussstellen sowie, falls vorhanden, die Speicherzustände der im System befindlichen Energiespeicher gehören. Kumulierte Energiemengen, resultierende Kosten und Energieflüsse sind zu diesem Zeitpunkt 0.

Ausgehend von einem Ausgangszustand kann in der Folge eine Entscheidung getroffen werden, die den nächsten Systemzustand festlegt. Hierzu steht der zuvor beschriebene Graph der Zustandsvariabilität zur Verfügung, der die Flexibilität und somit die möglichen Entscheidungen beschreibt. Trifft man die Entscheidung zunächst willkürlich, so stehen nun der nächste Betriebszustand sowie die konkreten Sollwerte für den nächsten Systemzustand fest, nicht jedoch die daraus resultierenden Zustandswerte für Energieflüsse oder Kosten. Entsprechend sind ergänzend die benötigten Informationen zu ermitteln, um die daraus resultierenden Energieflüsse und hierzu korrespondierende Energiemengen zu bestimmen. Darauf basierend, kann anschließend eine Bewertung des Folgezustands auf Grundlage geeigneter Kostenfunktionen und/oder anhand von Energieverlusten erfolgen. Dies kann z.B. einen oder mehrere der nachfolgenden Schritte enthalten:
- Ermittlung / Update der Systemvariablen (inklusive Prognosen)
- Bestimmung der Energieflüsse an den Anschlussstellen des technischen Systems sowie Bestimmung von Energieverlusten
- Bestimmung der Energieträger-spezifischen Energiemengen für die Zeit des Betriebszustands
- Update der Kostenfunktionen
- Bestimmung / Summierung der Energieträge-spezifischen sowie der Zustandskosten
- Summation von Energiemengen, Verlusten, und Kosten in Bezug auf den Vorgängerzustand

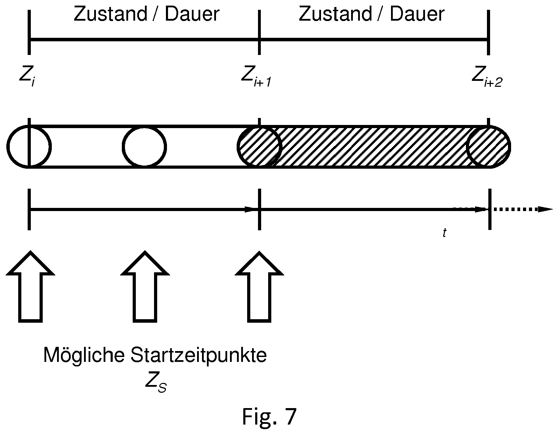

Das Modell kann beispielsweise zugleich auch den Zeitraum für einen Betriebszustand beschreiben, für den er definiert ist. Entsprechend kann der konkrete Startzeitpunkt für einen Ausgangszustand *Z_{S}* beispielsweise sowohl direkt am Anfang, in Mitten oder am Ende eines definierten Betriebszustandes liegen, siehe hierzu Figur 7. In allen Fällen ist jedoch zunächst die Situation zu bestimmen, die sich zum Zeitpunkt *Zᵢ₊₁* aus dem definierten (Start-) Zustand ergibt; eine Ausnahme kann in diesem Fall *Z_{S} = Zᵢ₊₁* bilden. Befindet sich der (Start-) Zustand vor dem Ende eines definierten Betriebszustands, erfolgt zunächst die Bestimmung analog zu den zuvor genannten Schritten, jedoch mit einer entsprechend verkürzten Zeitspanne. Der resultierende Zustand *Zᵢ₊₁* stellt damit den ersten Zustand dar, an dem eine Entscheidung bezüglich der Flexibilität eines System getroffen werden kann.

Die Aufgabe der Kanten des Graphen ist es, die Veränderungen zu beschreiben, die durch einen gewählten Folgezustand erzeugt werden. Basierend auf der Dauer und den Energieflüssen eines Betriebszustands (inkl. Verluste), können zu diesen Veränderungen zunächst die Energiemengen gehören, die über die einzelnen Netzanschlüsse des technischen Systems transferieret werden. Weiter können hierzu die dabei entstehenden, energieträgerabhängigen Kosten oder Erträge gehören. Darauf basierend lassen sich im weiteren Verlauf der bilanzierte resultierende Energieumsatz sowie die hierzu korrespondierende Veränderung in Bezug auf die Gesamtkosten ermitteln. Die hier angewendeten Berechnungsschritte entsprechen dabei im Wesentlichen dem im Rahmen des Kostenmodells vorgestellten Verfahren zur Ermittlung der Gesamtkosten, können aber entsprechend der Modellannahmen nur für einen gewählten Betriebszustand und eine Variante der möglichen Sollwertkombinationen gelten. Darüber hinaus können die Informationen über die umgesetzten Energieflüsse und -mengen für eine erneute Verwendung erhalten bleiben.

Im Rahmen eines Evaluationsprozesses muss der Differenzengraph nicht grundsätzlich erstellt werden. Vielmehr kann er z.B. dann zum Einsatz kommen, wenn man die hier beschriebene Grundsystematik des Energie-Optionsmodells anwendet. Dabei wird der Graph jedoch nicht direkt und vollumfänglich über den kompletten Evaluationszeitraum erstellt, sondern kann immer nur an den Stellen, an denen sich ein Suchprozess gerade befindet, erstellt werden. Ausgehend von einem Vorgängerzustand, kann dabei zunächst der Graph der Zustandsvariabilität dazu verwendet werden, um alle möglichen Veränderungen für Betriebszustand und Sollwerte zu ermitteln. Darauf basierend können anschließend alle hierzu korrespondierenden Veränderungen, sowie die sich hieraus ergebenden Folgezustände, ermittelt werden. Eine Erweiterung des Graphen hinter nicht besuchten Knoten bzw. Systemzuständen braucht nicht zu erfolgen.

Fasst man das Ziel der dritten Ebene zusammen, besteht ihre Hauptaufgabe darin, auf Grundlage eines aktuellen Systemzustands und auf Basis der dem System innewohnenden Flexibilität, alle erreichbaren Folgezustände zu ermitteln. Die dadurch am System auftretenden Veränderungen in Bezug auf Energiemengen und hierzu korrespondierenden Kosten können dabei quantifiziert werden. Der Differenzengraph kann dabei bereits konkrete Systemzustände berücksichtigen, jedoch fokussiert er nur auf die Energieflüsse an den Grenzen eines technischen Systems. Dies resultiert aus dem Ansatz zur eindeutigen Identifikation eines Systemzustands, der im Differenzengraphen ebenfalls die Knoten identifizierbar macht. Hierzu können die Systemparameter spezifiziert werden, die einen direkten oder indirekten Einfluss auf die Energieflüsse an den Grenzen des technischen Systems haben. Nur in speziellen Fällen müssen an dieser Stelle bereits die Speicherzustände eines technischen Systems in Betracht gezogen werden - ein Beispiel für ein solches System kann z.B. ein Gasspeicher sein, denn hier hängen die am Ein- bzw. Austritt des Speichers auftretenden Energieflüsse vom Innendruck und somit von der bereits im Speicher befindlichen Energiemenge ab.

### 4. Ebene - Grenzwerte und Einhaltung zeitlicher Restriktionen

Entsprechend der abschließenden Bemerkung zum Differenzengraphen, blieben die konkreten Speicherzustände eines technischen Systems bisher noch unberücksichtigt. Weiter wurden die zeitlichen Restriktionen, die mit minimalen und maximalen Verweilzeiten für einzelne Betriebszustände definiert werden können bisher noch nicht beachtet. Darüber hinaus sollen auch die durch den Regler eines Systems kontrollierten Regelwerte innerhalb der vorgegebenen Grenzen gehalten werden.

Die Berücksichtigung dieser Aspekte, ist Aufgabe der hier vorgestellten vierten Ebene, die die in der 3. Ebene ermittelten Folgezustände filtert und anschließend an die Ergebnisschicht weitergeben kann.

Ausgehend von einem aktuellen Systemzustand, der an dieser Stelle jedoch einen realistischen Speicherstand enthält, kann anhand der ausgehenden Kanten des Differenzengraphen überprüft werden, wie groß mögliche Veränderungen in Bezug auf die Füllstände eines Speichers sein können. Ist der Zustand, der sich aus einer Veränderung ergibt kleiner 0 oder größer als die angegebene Speicherkapazität, wird dieser Folgezustand von den weiteren Betrachtungen ausgeschlossen.

Die Überwachung und Filterung zur Einhaltung der minimalen und maximalen zeitlichen Restriktionen für einen Betriebszustand, kann eine Beachtung der zeitlich vorgelagerten Betriebszustände erfordern. Für die minimale Dauer gilt, dass ein Betriebszustand erst wieder verlassen werden darf, wenn die definierte minimale Aufenthaltszeit überschritten wurde. Entsprechend kann die Entscheidung, welcher Folgezustand zu einem konkreten Zeitpunkt eingenommen werden darf hiervon abhängig sein. Wurde die definierte minimale Zeit in der Reihe der Vorgängerzustände noch nicht erreicht, reduziert dies entsprechend die Liste der möglichen nächsten Betriebszustände. Analog gilt für die maximale Dauer, dass ein Betriebszustand dann verlassen werden soll, wenn die maximale Zeitspanne für einen Betriebszustand überschritten wird. Auch hier kann ein rückwärtsgewandter Suchprozess dazu verwendet werden, um diese Restriktion zu überprüfen und die Liste der möglichen Folgezustände bei Bedarf zu reduzieren.

Als letzter Aspekt, der in der 4. Ebene überprüft werden kann, sind durch die Reglung des technischen Systems vorgegebener Grenzwerte spezifischer Messwerte. Über- oder unterschreitet ein berechneter neuer Messwert den vorgegebenen Reglungsbereich kann der aus den Veränderungen resultierende neue Systemzustand herausgefiltert werden.

Die hier unter Umständen etwas abstrakt wirkenden Ausführungen zu Speicherzustand und zeitlichen Restriktionen, werden anschaulicher, sobald der Gesamtprozess der schrittweisen Grundsystematik betrachtet wird. Zur Erstellung eines einzelnen Fahrplans wird dabei auf alle Ebenen zugegriffen, so dass die nachfolgend beschriebene Ergebnisebene aufgebaut werden kann.

### 5. Ebene - Ergebnis- und Fahrplanebene

Das Ergebnis einer Evaluation und somit der Fahrplan für ein technisches System, wird im Modell durch den Zustand repräsentiert, der für das Ende des Evaluationszeitraums bestimmt wurde. Die zeitlich vorgelagerten Systemzustände können dabei rekursiv hinterlegt sein. Im Rahmen einer zeitlich vorwärts-gerichteten Evaluation, kann ein Folgezustand somit schrittweise ermittelt bzw. gewählt werden. Anschließend kann der Verweis des aktuellen Zustands in die Hinterlegung des Folgezustands gespeichert werden. So lange der durch die evaluationsvorbereitenden Einstellungen definierte Endzeitpunkt oder Endzustand nicht erreicht wurde, kann der Evaluationslauf auf diese Weise fortgeführt werden.

Mit Hilfe der zuvor beschriebenen Hilfsebenen, kann der Suchlauf zur Erstellung eines einzelnen Fahrplans in Schritt 200 so verlaufen, dass ausgehend vom initial festgelegten Systemzustand, der innerhalb des Zeitraums eines Betriebszustands liegen kann, zunächst sichergestellt werden kann, dass dieser bis zum Ende des Betriebszustands berechnet wird. D.h., dass zunächst die umgesetzten Energiemengen und Kosten bis zum Ende des aktuellen Betriebszustands bestimmt werden und somit auch die erste Kante im Differenzengraph erzeugt wird. Der sich anschließende Knoten und der hierzu korrespondierende Zustand des technischen Systems, stellen nachfolgend die Ausgangsbasis für den zyklisch verlaufenden Suchprozess dar, der hierzu die beschriebenen Hilfsebenen 2 bis 4 nutzt.

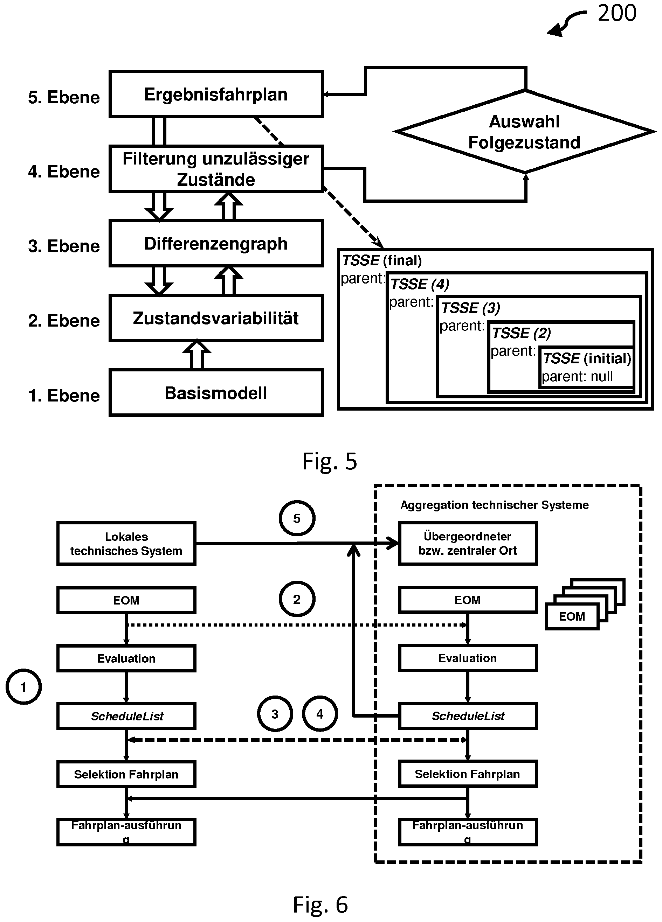

Auf Grundlage des für die Evaluation aktuellen Systemzustands kann im Differenzengraph angefragt werden, welche Variation von Folgezuständen für den aktuellen Systemzustand bestehen. Falls diese für den angefragten Zeitpunkt und den hierzugehörigen Systemzustand noch nicht bestimmt sind, können diese bei Anfrage erzeugt werden. Zur Erzeugung der Folgezustände kann zunächst mit Hilfe des Graphen der Zustandsvariabilität ermittelt werden, welche Veränderungen in Bezug auf Betriebszustände und Sollwerte per Definition im Basismodell möglich sind. Hieraus können anschließend die möglichen Veränderungen in Bezug auf Energieflüsse und -mengen, die hierzu korrespondierenden Kosten und die Folgezustände, bestimmt werden - letztere können gleichzeitig durch neue Knoten im Differenzengraph abgebildet werden. Bevor dieses Zwischenergebnis in der Ergebnisebene angewendet werden kann, kann die 4. Ebene der Grundsystematik die Zulässigkeit der möglichen Veränderungen überprüfen und filtern. Abhängig vom Zustandsverlauf und vom aktuellen Systemzustand, können die vom Differenzengraphen ausgewiesenen Folgezustände hinsichtlich Speicherzustände und einzuhaltender zeitlicher Restriktionen überprüft werden, so dass in die Ergebnisebene nur validierte und anwendbare Folgezustände zurückgegeben werden. Danach kann es die Aufgabe eines Entscheidungsprozesses sein den nächsten Systemzustand festzulegen. Die Figur 5 stellt den hier beschriebenen Zusammenhang der Bewertung in Schritt 200 sowie einen strukturellen Aufbau eines Ergebnisfahrplans grafisch dar, wobei der Ergebnisfahrplan sich dann im Rahmen der Bewertung als TSSE (final) aus den jeweils in den einzelnen Ebenen ermittelten Zwischenfahrplänen TSSE (initial), TSSE (2) ... TSSE (4) ergibt.

Natürlich ist es auch möglich die Teilschritte innerhalb Schritt 200 zu parallelisieren. Insofern stellen die vorgestellten Teilschritte und Ebenen nur Beispiele eines Modells dar.

Die im Grundsatz mögliche Parallelisierung von Evaluations-Strategien durch die Ausführung mehrerer Evaluations-Threads, kann auch für die hier vorgestellte schrittweise Grundsystematik umgesetzt werden. Im Differenzengraphen stellte dabei die gleichzeitige Erstellung von Knoten für einen Systemzustand das Hauptproblem dar, da sie zu inkonsistenten oder sogar überschriebenen Knoteninstanzen innerhalb des Graphen führen kann. Zur Umgehung dieses Problems wurde hierfür ein Sperrverfahren entwickelt, dass die gleichzeitige Erstellung von Knoten für ein und denselben Systemzustand verhindert. Mit einer entsprechenden Synchronisation im Differenzengraphen kann dabei die gleichzeitige Erstellung von Zustandsknoten verhindert werden. Gleichzeitig kann der erstellte Knoten mit einer Sperre belegt werden, die nur durch den Knoten-erstellenden Thread wieder gelöst werden kann. Andere Threads müssen in solchen Fällen die Bearbeitung des Zustandsknotens und seiner Folgezustände abwarten, können aber anschließend lesend und somit schneller auf die entsprechenden Informationen zugreifen. Abhängig von der Variabilität eines technischen Systems und der hierzu korrespondierenden Größe des Zustandsraumes kann eine Parallelisierung unter Umständen von Vorteil sein, um schneller zu einem Ergebnis zu gelangen.

Bereits im Rahmen einer einzelnen Evaluations-Strategie besteht die Möglichkeit mehrere Ergebnisse zu erstellen, so dass zum Abschluss einer Evaluation mehrere alternative Fahrpläne zur Verfügung stehen und weiterverwendet können.

Mit der Aggregation von technischen Systemen, ermöglicht das Modell die gleichzeitige Betrachtung mehrerer Systeme. Der Systemgedanke und somit die Kapselung einzelner Systeme wird dabei als Grundlage verwendet, um ein System von Systemen zu beschreiben. Die Aggregation selbst kann dabei ein eigenes System darstellen, während alle zu berücksichtigenden Subsysteme weiterhin in der zuvor beschriebenen Art und Weise gehandhabt werden können. Somit lassen sich beliebig komplexe Kombinationen von Systemen, z.B. als baumartige Struktur, konfigurieren, in der Einzelsysteme in der vorab beschriebenen Form verwendet werden oder durch alternative bzw. einzelne Fahrpläne repräsentiert werden können. Zur Evaluation von Aggregationen kann das Konzept der schrittweisen Vorgehensweise zur Evaluation einzelner Systeme erweitert und angepasst werden. Ergänzend können im Rahmen der Anwendung einer individuellen Evaluations-Strategie zusätzlich Netzzustandsberechnungen durchgeführt werden. Analog zu einzelnen Systemen können auch hier individuelle Strategien entwickelt und eingesetzt werden.

Nachfolgend wird kurz noch einmal die auf der Struktur basierenden Möglichkeiten zur Anwendung des Modells dargestellt werden. Dabei können das Modell sowie das Konzept der einzelnen oder alternativen Fahrpläne die Grundlage für die unterschiedlichen Anwendungsarten darstellen. Die Figur 6 skizziert diese Variante grafisch.

Wie zuvor dargestellt, erlauben die Struktur des zugrundeliegenden Datenmodells sowie das Frameworks des Modells sowohl die Beschreibung und Evaluation von einzelnen, wie auch von mehreren technischen Systemen. Entscheidungen in Bezug auf Betriebszustandswechsel und Sollwertkonfigurationen können auf dieser Grundlage einheitlich dargestellt und verwendet werden. Die Entscheidungsprozesse selbst sind dabei in Kontrollprozesse einzubetten, die entsprechend der beschriebenen Ansätze einerseits lokal, andererseits aber auch zentral verortet sein können. Dabei kann die Verwendung des Energie-Optionsmodells innerhalb eines Energie-Agenten den Standardfall darstellen, sie ist jedoch nicht allein auf diese Nutzungsart beschränkt. Bezüglich der Vorgehensweise, um von der Definition eines technischen Systems zu einem ausführbaren Fahrplan zu gelangen, lassen sich auf Grundlage des Modells prinzipiell die folgenden Evaluations- und hierzu korrespondierenden, verteilten Interaktionssystematiken realisieren:
1. Der in der Figur 6 mit 1 gekennzeichnete Anwendungsfall stellt die Nutzung des Modells in einer rein lokalen Anwendung dar und entspricht somit der Evaluationssystematik für einzelne Energiewandlungsprozesse. In diesem Fall wird im Wesentlichen nur die linke Hälfte der Figur 6 betrachtet. Der Vor-Ort eingesetzte Energie-Agent nutzt die zur Verfügung stehenden Grundinformationen des Modells sowie den aktuellen Systemzustand und ggf. notwendige Prognosen, um für einen bestimmten Evaluationszeitraum einen "optimierten" Fahrplan zu entwerfen und ihn anschließend an den Prozess der Fahrplanausführung zu übergeben. D.h. es findet lediglich Kommunikation zwischen einer Energie-Wandlungsentität und der zugehörigen Bewertungsentität BE statt, z.B. ein Verbraucher wird auf Grund lokaler Parameter optimiert.
2. Ausgehend von einem einzelnen, dezentral verorteten System, wird die zugehörige Definition des Modells (EOM) an einen aggregierenden Energie-Agenten übergeben. Ergänzend hierzu werden bei Bedarf aktuelle Systemzustände an diesen übergeordneten Prozess übermittelt, so dass diese im Rahmen einer Fahrplanerstellung berücksichtigt werden können. In diesem Verfahren werden alle notwenigen Entscheidungen zentral getroffen und nur der resultierende Fahrplan an den Vor-Ort befindlichen Prozess zur Fahrplanausführung übergeben.
3. In dieser Systematik wird die Evaluation des Systems zunächst lokal durchgeführt. Dabei werden auch hier alternative Fahrpläne erzeugt, die im Anschluss dem aggregierenden Prozess übermittelt werden. Im Rahmen der Gruppen-Evaluation wird ein alternativer Fahrplan selektiert und anschließend an das lokale System zurückgegeben. Für den Fall, dass durch den lokalen Prozess keine Alternativen sondern nur ein einzelner Fahrplan übermittelt wird, kann der aggregierende Prozess den mit einer Systemprognose gleichzusetzenden Fahrplan innerhalb der Aggregation berücksichtigen.
4. Der mit 4 gekennzeichnete Weg verläuft zunächst analog zu dem in 2 vorgestellten Verfahren, jedoch werden hier alternative Fahrpläne an den lokalen Prozess übermittelt. Die Entscheidung welcher Fahrplan zur Anwendung kommt, wird dem lokalen Prozess überlassen, der den gewählten Fahrplan einerseits dem Prozess der Fahrplanausführung übergibt, andererseits aber den gewählten Fahrplan als Prognose an das aggregierende technische System zurücksendet. Werden durch die Aggregation keine alternativen Fahrpläne erzeugt, kann dieser direkt an den Prozess zur Fahrplanausführung übergeben werden.
5. Bei dem mit der Nummer 5 angedeuteten Verfahren handelt es sich um einen komplett dezentralen Ansatz zur Kontrolle von mehreren Energiewandlungsprozessen, der mit Hilfe des Modells der Erfindung umgesetzt werden kann. Der Ansatz kann dabei beispielswiese ein rundenbasiertes Verfahren verwenden, in dem jedes beteiligte System eine Evaluation auf Grundlage einer Aggregation ausführt, wobei sich die Aggregation dann aus mindestens einem technischen System und einem Fahrplan zusammensetzt. Der statische Fahrplan beschreibt hier die Summe der Energieumsätze der Vorgängersysteme, während das technische System das aktuelle System repräsentiert, für das ein Fahrplan zu erstellen ist. Durch die Verwendung dieser beiden Beschreibungen innerhalb einer Aggregation können einerseits die notwendigen Kontrollentscheidungen für das aktuelle System festgelegt, d.h. der Fahrplan erstellt werden. Andererseits wird automatisch die daraus resultierende neue Summe der Energieumsätze ermittelt, die anschließend an das Folgesystem übermittelt werden kann um das Verfahren dort fortzusetzen.

Die oben vorgestellten Ansätze zur Verwendung des Modells erheben keinen Anspruch auf Vollständigkeit. Mit Hilfe von weiteren Variationen, die für die einzelnen genannten Verwendungsarten denkbar sind, lassen sich hier eine Vielzahl von Sub-Varianten entwickeln.

Ohne Beschränkung der Allgemeinheit können verschiedene Ansätze auch in einem Energie-Austausch-Netz nebeneinander vorhanden sein. Insbesondere sei angemerkt, dass es zudem möglich ist die Erfindung in laufende Systeme zu integrieren, da z.B. Systeme, die den Ansatz der Erfindung noch nicht unterstützen, über die Funktion von Messwerten ermittelt durch Sensoren und/oder Prognosedaten im System mitberücksichtigt werden können.

Neben der Anwendung für planerische Zwecke, bei der im Rahmen der Evaluation ein vorgegebener Zeitraum betrachtet wird, eignet sich das Modell darüber hinaus auch für Addhoc-Entscheidungsprozesse, die beispielsweise im Bereich der regelungstechnischen Kontrolle angewendet werden können. Im Rahmen einer Aggregation, die z.B. ein einzelnes Haus oder ein Verteilnetz darstellt, können die kontinuierlich fortgeschriebenen Systemzustände der beteiligten Systeme dazu verwendet werden, um für jeden Energiewandlungsprozess zeitlich aktuelle Handlungsoptionen zu ermitteln. Dabei könnte ein sich an der aktuellen Zeit orientierender Evaluationsprozess, der aktuellen Zeit vorauseilen und dabei die möglichen Folgezustände vorevaluieren. Da diese Evaluationsergebnisse im Differenzengraphen des betreffenden Systems hinterlegt werden, führt dies gleichzeitig zu einem beschleunigten Antwortzeitverhalten, was für zeitkritische Anwendungen von enormer Bedeutung ist.

Ein Ziel der Erfindung ist es, zunächst die Flexibilität eines technischen zu beschreiben und im Sinne einer übergeordneten Zielsetzung nutzbar bzw. kontrollierbar zu machen. Die Struktur des Modells ermöglicht dabei sowohl die Beschreibung beliebiger Energiewandlungsprozesse, wie auch die Berücksichtigung unterschiedlicher Energieträger, wie z.B. Strom und Erdgas. Dabei beschränkt sich dieser hybride Ansatz nicht allein auf die Abbildung der vorhandenen Flexibilität in Bezug auf Betriebszustände, Sollwertvariationen und hieraus resultierenden Energieflüssen, sondern unterstützt durch seinen Ansatz insbesondere die Entwicklung neuer, heute noch nicht vorhandener Betriebs- und Systemzustände.

Durch eine grundsätzliche Trennung von der in einem technischen System verorteten Regelung und einem ergänzenden, externen Abwägungs- und Kontrollprozess der z.B. von einem Energie-Agenten verwaltet wird, entsteht auf Basis der Erfindung ein neuer adaptiver Ansatz, der Entscheidungs- und Kontrollstrukturen zunächst einheitlich beschreiben kann und es damit ermöglicht die Verortung des bzw. der eigentlichen Entscheidungsprozesse(s) flexibel zu gestalten. Der Anknüpfungspunkt zur Kontrolle einzelner technischer Systeme ist somit zunächst die informationstechnologische Schnittstelle, die durch die Regelung eines Systems angeboten wird.

Ein Ziel der Erfindung ist es, den Zusammenhang zwischen diesen Informationen und den hierzu korrespondierenden Energieflüssen funktional abbilden zu können, um so als Grundlage für realistische und somit zuverlässige Prognose-, Überwachungs- und Optimierungsprozesse dienen zu können.

Als Beschreibung der am System verfügbaren Messwerte, Regel-Sollwerte und Benutzervorgaben, werden im Modell sog. Systemvariablen definiert. Ergänzend zu den genannten Variablentypen erlaubt das Modell (EOM) zusätzlich die Definition statischer Datenmodelle sowie die Definition von Systemvariablen, die nicht direkt am technischen System, sondern nur über externe Informationsdienste ermittelt werden können. Somit können z.B. einerseits statische Kennfelder von Systemen oder andererseits externe Wetterinformationen im Energie-Optionsmodell definiert und verwendet werden. Alle Systemvariablen zusammen dienen dabei dem Zweck, die Basis-, Ein- und Ausgangsinformationen zu beschreiben, die Einfluss auf die an einem Energiewandlungsprozess auftretenden Energieflüsse haben.

In Bezug auf einen einzelnen Energiewandlungsprozess bzw. ein einzelnes technisches System, werden darüber hinaus weitere Informationen erfasst, die zusammenfassend als Basismodell des Modells der Erfindung bezeichnet werden. Hierzu gehören zunächst die Definition der Systemgrenzen, die ein einzelnes System mit einem oder mehreren Energienetzen und hierzu korrespondierenden Energieträgern verbindet sowie die dabei möglichen Anschlussvariationen. Beispielsweise lassen sich somit die unterschiedlichen Anschlussmöglichkeiten eines Elektroautos beschreiben (siehe z.B. *IEC 62196*) oder die unterschiedlichen Arten ein System zu nutzen (z.B. für unterschiedliche Programme bei Geräten der weißen Ware).

Die Modellierung der Betriebszustände eines Systems kann durch einen gerichteten Graphen ermöglicht werden. Hierbei stellen die Knoten des Graphen die einzelnen, zeitlich beschränkten Betriebszustände dar, während die gerichteten Kanten die mögliche Abfolge dieser Zustände beschreibt. Über die Definition von minimalen und maximalen Grenzen lässt sich zusätzlich die Verweildauer in einem Betriebszustand beschränken, um so beispielsweise ein System zu schützen oder den Speicherzustand eines Systems zu berücksichtigen.

Abhängig von den Energieträger-abhängigen Netzschnittstellen eines Energiewandlungsprozesses lassen sich für jeden Betriebszustand entsprechende Energieflüsse definieren. Darüber hinaus lassen sich unter anderem Funktionen für die minimale und maximale Verweildauer in einem Betriebszustand definieren, mögliche Energiefluss-Gradienten oder Berechnungsverfahren, die zur Bestimmung von Verlustenergien verwendet werden können.

Auf Grundlage des Modells wird ein genereller Ansatz geboten, der es erlaubt detaillierte Ausführungsfahrpläne für einzelne Systeme zu erstellen. Dies geschieht mit Hilfe einer sog. Evaluations-Strategie. Zur Vorbereitung der Evaluation werden zunächst zeitliche Systemzustände definiert, die somit gleichzeitig den zu betrachtenden Evaluationszeitraum definieren. Weiter können hier auf unterschiedliche Weisen Prognosefunktionen für den betrachteten Zeitraum definiert werden. Auf diese Weise lassen sich beispielsweise Wetterinformationen für den betrachteten Zeitraum zur Verfügung stellen, die im Rahmen von entsprechenden Berechnungen zur Bestimmung der produzierten Strommenge einer Photovoltaikanlage genutzt werden können.

Da die Zielsetzungen zur Kontrolle eines technischen Systems unterschiedlicher Natur sein können, bietet das Modell auch hier einen offenen Ansatz zur Bewertung der operationalen Nutzung von Energiewandlungsprozessen. Auf Grundlage einer Energiemengen-basierten Kenngröße, können individuelle Kostenfunktionen definiert werden, die einerseits die am System auftretenden Energieflüsse, andererseits aber auch die konkreten Betriebszustände eines Systems bewerten können. Hiermit lassen sich beispielswiese Bewertungsgrößen in *€* / *kWh* oder *kg*-*CO₂* / *MWh* definieren, die im Rahmen der Systemevaluation auf die konkreten Zustände, Leistungskenngrößen und Zeiträume angewendet werden können.

Neben der Nutzung der offenen Schnittstelle zur Erstellung eines Systemfahrplans, bietet das Modell gleichfalls eine spezielle, schrittweise Vorgehensweise zur Fahrplangenerierung an, die auch im Rahmen individueller Evaluations-Strategien genutzt werden kann. Über die Abbildung der Systemzustände in einem Differenzengraphen, können Systemzustände und hierzu mögliche Folgezustände abgebildet werden. Auf dieser Grundlage können Kontrollentscheidungen durch quantifizierende Parameter wie Leistungs- und Speichergrößen qualifiziert werden, was das Treffen von Kontrollentscheidungen fundiert und somit erheblich vereinfacht. Als Ergebnis der Evaluation eines einzelnen Systems kann ein detaillierter Ergebnisfahrplan zur Verfügung gestellt werden, der eine ausführliche Beschreibung der zeitlichen Systemzustände darstellen kann. Hierin enthalten können sowohl die Basis-, Ein- und Ausgangsinformationen des Systems, wie auch die resultierenden Energieflüsse, die von diesen Parametern abhängen können, sein. Hinzu können Speicherzustände, Energieflüsse sowie die auf Basis der Bewertungsgrößen bestimmten "Kosten" kommen. Auch der Ergebnisfahrplan kann ein serialisierbares Element darstellen, so dass dieser bei Bedarf über einen Nachrichtenaustausch kommuniziert werden kann.

Mit der Aggregation von technischen Systemen, ermöglicht das Modell der Erfindung die gleichzeitige Betrachtung mehrerer technischer Systeme, die einen netzgekoppelten Energiewandlungsprozess darstellen. Der Systemgedanke und somit die Kapselung einzelner Systeme wird dabei als Grundlage verwendet, um ein System von Systemen zu beschreiben. Die Aggregation selbst kann dabei ein eigenes System darstellen, während alle zu berücksichtigenden Subsysteme weiterhin in der zuvor beschriebenen Art und Weise gehandhabt werden können. Somit lassen sich beliebig komplexe Kombinationen von Systemen als baumartige Struktur konfigurieren, in der Einzelsysteme in der vorab beschriebenen Form verwendet werden oder durch alternative oder einzelne Fahrpläne repräsentiert werden können. Zur Evaluation von Aggregationen kann das Konzept der schrittweisen Vorgehensweise zur Evaluation einzelner Systeme erweitert und angepasst werden. Ergänzend können im Rahmen der Anwendung einer individuellen Evaluations-Strategie zusätzlich Netzzustandsberechnungen durchgeführt werden. Analog zu einzelnen Systemen können jedoch auch hier individuelle Strategien entwickelt und eingesetzt werden. Die aus dem Ansatz resultierende Flexibilität in Bezug auf die Verortung von Entscheidungsprozessen wurde durch Figur 6. vorgestellt.

Obwohl zuvor nur eher statische Beispiele beschrieben wurden ist es ohne weiteres möglich auch im laufenden Betrieb aktuelle Daten zwischen den Energie-Wandlungs-Entitäten EWE₁, EWE₂ und der Bewertungsentität BE auszutauschen. Insbesondere kann es vorgesehen sein auch Fahrpläne auf Basis aktualisierter Daten neu zu erstellen oder zu optimieren und diese dann in gleicher Weise zur Verfügung zu stellen.

Um den Datenaustausch zwischen den einzelnen Entitäten, d.h. zwischen den Energie-Wandlungs-Entitäten EWE₁, EWE₂ und der Bewertungsentität BE, aber auch den Benutzerschnittstellen UI, Sensoren SEN und/oder Datenbanken DB zu erleichtern, kann vorgesehen sein, dass die Daten in einer bestimmten Struktur, beispielsweise einem XML-Format ausgetauscht werden. Insbesondere können aber auch Techniken wie SOAP oder REST zur Abfrage von Daten zum Einsatz kommen.

## Patentansprüche

1. Verteiltes Energie-Wandlungs-System, wobei das Verteilte
Energie-Wandlungs-System aufweist:
• zumindest eine erste Energie-Wandlungs-Entität (EWE₁) eine zweite Energie-Wandlungs-Entität (EWE₂), und eine dritte Energie-Wandlungs-Entität (EWE₃),
• wobei die Energie-Wandlungs-Entitäten (EWE₁, EWE₂, EWE₃) untereinander über ein Energie-Austausch-Netz (EAN) verbunden sind,
• wobei das verteilte Energie-Wandlungs-System dazu eingerichtet ist, zumindest eine der Energie-Wandlungs-Entitäten (EWE₁, EWE₂, EWE₃) aus der Gruppe aufweisend die erste Energie-Wandlungs-Entität (EWE₁), die zweite Energie-Wandlungs-Entität (EWE₂), und die dritte Energie-Wandlungs-Entität (EWE₃), dynamisch in eine Aggregationen des Energie-Wandlungs-Systems einzufügen oder zu entfernen,
• weiterhin aufweisend eine Bewertungsentität (BE),
• wobei die Energie-Wandlungs-Entitäten (EWE₁, EWE₂, EWE₃) und die Bewertungsentität (BE) jeweils über eine Kommunikationseinheit verfügen,
• wobei die Kommunikationseinheit der Bewertungsentität (BE) dazu eingerichtet ist mit den Energie-Wandlungs-Entitäten (EWE₁, EWE₂, EWE₃) zu kommunizieren,
• wobei die erste Energie-Wandlungs-Entität (EWE₁) zu einem ersten Zeitpunkt die Eigenschaft eines Energie-Versorgungs-Element, und die zweite Energie-Wandlungs-Entität (EWE₂) die Eigenschaft eines Energie-Abnahme-Element aufweist, **dadurch gekennzeichnet, dass**
• die erste Energie-Wandlungs-Entität (EWE₁) dazu eingerichtet ist Daten bezüglich der Bereitstellung von Energie der Bewertungsentität (BE) zur Verfügung zu stellen, wobei die Daten ein oder mehr aus dem nachfolgenden aufweisen: Verfügbarkeitszeitraum, Verfügbarkeitsmenge, Kosten/Energieeinheit Schadstoffmenge/Energieeinheit, Speicherzustand für einen oder mehrere zukünftige Zeiträume,
• die zweite Energie-Wandlungs-Entität (EWE₂) dazu eingerichtet ist Daten bezüglich der Abnahme und/oder Verwendung und/oder Speicherung von Energie der Bewertungsentität (BE) zur Verfügung zu stellen, wobei die Daten ein oder mehr aus dem nachfolgenden aufweisen: Abnahmezeitraum, Abnahmemenge, Speichermenge für zwei oder mehr zukünftige Zeiträume,
• die Bewertungsentität (BE) dazu eingerichtet ist anschließend eine Bewertung der zur Verfügung gestellten Daten vorzunehmen, um einen Fahrplan für die Abnahme von Energie zu erstellen, wobei die Bewertungsentität (BE) Bestandteil der ersten Energie- Wandlungs-Entität (EWE₁) ist und/oder Bestandteil der zweiten Energie- Wandlungs-Entität (EWE₂) ist.

2. Verteiltes Energie-Wandlungs-System nach Anspruch 1, **dadurch gekennzeichnet, dass** durch den Fahrplan Einfluss auf die systemimmanenten Parameter der Abnahme und/oder Verwendung und/oder Speicherung von Energie der zweiten Energie-Wandlungs-Entität (EWE₂) genommen wird.

3. Verteiltes Energie-Wandlungs-System nach einem der vorhergehenden Ansprüche, **dadurch gekennzeichnet, dass** die Bewertungsentität dazu eingerichtet ist Topologie-Daten und/oder Systemzustände des Energie-Austausch-Netz (EAN) der zu erhalten, wobei die Topologie-Daten und/oder Systemzustände bei der Bewertung mitberücksichtigt werden.

4. Verteiltes Energie-Wandlungs-System nach einem der vorhergehenden Ansprüche, **dadurch gekennzeichnet, dass** die Bewertungsentität dazu weiterhin eingerichtet ist Daten bezüglich einer der Energie-Wandlungs-Entität (EWE₁, EWE₂) von einem Benutzer der Energie-Wandlungs-Einheit (EWE₁, EWE₂) zu erhalten, wobei die manuellen Daten bei der Bewertung mitberücksichtigt werden.

5. Verteiltes Energie-Wandlungs-System nach einem der vorhergehenden Ansprüche, **dadurch gekennzeichnet, dass** die Bewertungsentität (BE) dazu eingerichtet ist Umgebungsdaten zu erhalten.

6. Verteiltes Energie-Wandlungs-System nach einem der vorhergehenden Ansprüche, **dadurch gekennzeichnet, dass** die zweite Energie- Wandlungs-Entität (EWE₂) eingerichtet ist, um Nutzerdaten bezogen auf die zweite Energie- Wandlungs-Entität (EWE₂) der Bewertungsentität (BE) zur Verfügung zu stellen, wobei die Daten Benutzervorgaben, für einen oder mehrere zukünftige Zeiträume aufweisen.

7. Verteiltes Energie-Wandlungs-System nach einem der vorhergehenden Ansprüche, **dadurch gekennzeichnet, dass** die erste Energie- Wandlungs-Entität (EWE₁) eingerichtet ist, um Nutzerdaten bezogen auf die erste Energie- Wandlungs-Entität (EWE₁) der Bewertungsentität (BE) zur Verfügung zu stellen, wobei die Daten Benutzervorgaben für einen oder mehrere zukünftige Zeiträume aufweisen.

8. Verteiltes Energie-Wandlungs-System nach einem der vorhergehenden Ansprüche, **dadurch gekennzeichnet, dass** die Bewertungsentität (BE) dazu eingerichtet ist, Prognose-Daten bezogen auf zumindest eine der Energie- Wandlungs-Entitäten (EWE₁, EWE₂) zu erhalten, wobei die Daten ein oder mehr aus dem nachfolgenden aufweisen: Energieerzeugung, Speichervolumen für einen oder mehrere zukünftige Zeiträume.

9. Verteiltes Energie-Wandlungs-System nach einem der vorhergehenden Ansprüche, **dadurch gekennzeichnet, dass** die Bewertungsentität (BE) dazu eingerichtet ist Daten bezüglich einer Mehrzahl von Energie-Trägern zu verarbeiten, wobei die Energie-Träger ausgewählt sind aus einer Gruppe aufweisend elektrische Energie, chemisch gespeicherte Energie, thermische Energie.

## Claims

1. A distributed energy conversion system, wherein the distributed energy conversion system comprises:
• at least a first energy conversion entity (EWE₁), a second energy conversion entity (EWE₂), a third energy conversion entity (EWE₃),
• with the energy conversion entities (EWE₁, EWE₂, EWE₃) being interconnected via an energy exchange network (EAN),
• wherein the distributed energy conversion system is arranged to add or remove dynamically at least one of the energy conversion entities out of the group comprising the first energy conversion entity (EWE₁), the second energy conversion entity (EWE₂) and the third energy conversion entity (EWE₃) to / from an aggregation of the energy conversion system,
• further comprising an evaluation entity (BE),
• wherein the energy conversion entities (EWE₁, EWE₂, EWE₃) and the evaluation entity (BE) each comprise a communication unit,
• wherein the communication unit of the evaluation entity (BE) is arranged to communicate with the energy conversion entities (EWE₁, EWE₂, EWE₃),
• wherein the first energy conversion entity (EWE₁) comprises the properties of an energy supply element at a first point in time and the second energy conversion entity (EWE₂) comprises the properties of an energy consumption element, **characterized in that**
• the first energy conversion entity (EWE₁) is arranged to make data concerning the provision of energy available to the evaluation entity (BE), and wherein the data includes one or more of the following: availability period, available quantity, cost/unit of energy, amount of pollutant/unit of energy, and storage state for one or more future time periods,
• the second energy conversion entity (EWE₂) is arranged to makes data concerning the consumption and/or use and/or storage of energy available to the evaluation entity (BE), and wherein the data includes one or more of the following: consumption period, consumed quantity, and stored quantity for two or more future time periods,
• the evaluation unit (BE) being arranged to subsequently perform an evaluation of the data that are made available in order to create a roadmap for the consumption of energy, and with the evaluation entity (BE) being a component of the first energy conversion entity (EWE₁) and/or a component of the second energy conversion entity (EWE₂).

2. The distributed energy conversion system as set forth in claim 1, **characterized in that** influence is exercised on the system-inherent parameters of the consumption and/or use and/or storage of energy of the energy conversion entity (EWE₂).

3. The distributed energy conversion system as set forth in any one of the preceding claims, **characterized in that** the evaluation unit (BE) being arranged to receive topological data and/or system states of the energy exchange network (EAN), whereby the topological data and/or system states are also taken into account in the evaluation.

4. The distributed energy conversion system as set forth in any one of the preceding claims, **characterized in that** the evaluation unit (BE) is arranged to receive data concerning one of the energy conversion entities (EWE₁, EWE₂) by a user of the energy conversion entity (EWE₁, EWE₂), whereby the manual data also being taken into account in the evaluation.

5. The distributed energy conversion system as set forth in any one of the preceding claims, **characterized in that** the evaluation unit (BE) is arranged to receive environmental data.

6. The distributed energy conversion system as set forth in any one of the preceding claims, **characterized in that** the second energy conversion entity (EWE₂) is arranged to provide user data in relation to the second energy conversion entity (EWE₂) to the evaluation entity (BE), whereby the data includes user specifications for one or more future time periods.

7. The distributed energy conversion system as set forth in any one of the preceding claims, **characterized in that** to the first energy conversion entity (EWE₁) is arranged to provide user data in relation to the first energy conversion entity (EWE₁) to the evaluation entity (BE), whereby the data includes user specifications for one or more future time periods.

8. The distributed energy conversion system as set forth in any one of the preceding claims, **characterized in that** the evaluation entity (BE) is arranged to receive prognostic data pertaining to at least one of the energy conversion entities (EWE₁, EWE₂), whereby the data includes one or more of the following: energy production, storage volume for one or more future time periods.

9. The distributed energy conversion system as set forth in any one of the preceding claims, **characterized in that** the evaluation entity (BE) is arranged to process data concerning a plurality of energy carriers, with the energy carriers being selected from a group which includes electrical energy, chemically stored energy, thermal energy.

## Revendications

1. Système distribué de conversion d'énergie, dans lequel le système distribué de conversion d'énergie présente :
• au moins une première entité de conversion d'énergie (EWE₁), une deuxième entité de conversion d'énergie (EWE₂), et une troisième entité de conversion d'énergie (EWE₃),
• dans lequel les entités de conversion d'énergie (EWE₁, EWE₂, EWE₃) sont reliées entre elles via un réseau d'échange d'énergie (EAN),
• dans lequel le système distribué de conversion d'énergie est étudié pour intégrer au moins l'une des entités de conversion d'énergie (EWE₁, EWE₂, EWE₃) du groupe présentant la première entité de conversion d'énergie (EWE₁), la deuxième entité de conversion d'énergie (EWE₂), et la troisième entité de conversion d'énergie (EWE₃), de manière dynamique dans une agrégation, ou pour la retirer de manière dynamique de celle-ci, du système distribué de conversion d'énergie,
• présentant en outre une entité d'évaluation (BE),
• dans lequel les entités de conversion d'énergie (EWE₁, EWE₂, EWE₃) et l'entité d'évaluation (BE) disposent respectivement d'une unité de communication,
• dans lequel l'unité de communication de l'entité d'évaluation (BE) est étudiée pour communiquer avec les entités de conversion d'énergie (EWE₁, EWE₂, EWE₃),
• dans lequel la première entité de conversion d'énergie (EWE₁) présente, à un premier moment, la propriété d'un élément d'alimentation en énergie et la deuxième entité de conversion d'énergie (EWE₂) présente la propriété d'un élément de consommation d'énergie,
**caractérisé en ce que**
• la première entité de conversion d'énergie (EWE₁) est étudiée pour fournir des données concernant la fourniture d'énergie à l'entité d'évaluation (BE), dans lequel les données présentent l'un(e) ou plusieurs parmi ce qui suit : période de disponibilité, quantité disponible, coûts/unité d'énergie, quantité de polluants/unité d'énergie, état d'accumulation pour une ou plusieurs périodes futures,
• la deuxième entité de conversion d'énergie (EWE₂) est étudiée pour fournir des données concernant la consommation et/ou l'emploi et/ou l'accumulation d'énergie à l'entité d'évaluation (BE), dans lequel les données présentent l'un(e) ou plusieurs parmi ce qui suit : période de consommation, quantité consommée, quantité accumulée pour deux ou plusieurs périodes futures,
• l'entité d'évaluation (BE) est étudiée pour ensuite procéder à une évaluation des données fournies pour établir une feuille de route pour la consommation d'énergie, dans lequel l'entité d'évaluation (BE) est un élément constitutif de la première entité de conversion d'énergie (EWE₁) et/ou un élément constitutif de la deuxième entité de conversion d'énergie (EWE₂).

2. Système distribué de conversion d'énergie selon la revendication 1, **caractérisé en ce que**, grâce à la feuille de route, une influence s'exerce sur les paramètres inhérents au système de la consommation et/ou l'emploi et/ou l'accumulation d'énergie de la deuxième entité de conversion d'énergie (EWE₂).

3. Système distribué de conversion d'énergie selon l'une des revendications précédentes, **caractérisé en ce que** l'entité d'évaluation est étudiée pour obtenir des données de topologie et/ou des états de système du réseau d'échange d'énergie (EAN), dans lequel les données de topologie et/ou états du système sont pris en compte lors de l'évaluation.

4. Système distribué de conversion d'énergie selon l'une des revendications précédentes, **caractérisé en ce que** l'entité d'évaluation est en outre étudiée pour obtenir des données concernant l'une des entités de conversion d'énergie (EWE₁, EWE₂) d'un utilisateur de l'unité de conversion d'énergie (EWE₁, EWE₂), dans lequel les données manuelles sont prises en compte lors de l'évaluation.

5. Système distribué de conversion d'énergie selon l'une des revendications précédentes, **caractérisé en ce que** l'entité d'évaluation (BE) est étudiée pour obtenir des données sur l'environnement.

6. Système distribué de conversion d'énergie selon l'une des revendications précédentes, **caractérisé en ce que** la deuxième entité de conversion d'énergie (EWE₂) est étudiée pour fournir des données d'utilisateur par rapport à la deuxième entité de conversion d'énergie (EWE₂) à l'entité d'évaluation (BE), dans lequel les données présentent des préférences utilisateur, pour une ou plusieurs périodes futures.

7. Système distribué de conversion d'énergie selon l'une des revendications précédentes, **caractérisé en ce que** la première entité de conversion d'énergie (EWE₁) est étudiée pour fournir des données d'utilisateur par rapport à la première entité de conversion d'énergie (EWE₁) à l'entité d'évaluation (BE), dans lequel les données présentent des préférences utilisateur pour une ou plusieurs périodes futures.

8. Système distribué de conversion d'énergie selon l'une des revendications précédentes, **caractérisé en ce que** l'entité d'évaluation (BE) est étudiée pour obtenir des données de prévision par rapport à au moins l'une des entités de conversion d'énergie (EWE₁, EWE₂), dans lequel les données présentent l'un(e) ou plusieurs parmi ce qui suit : production d'énergie, volume d'accumulation pour une ou plusieurs périodes futures.

9. Système distribué de conversion d'énergie selon l'une des revendications précédentes, **caractérisé en ce que** l'entité d'évaluation (BE) est étudiée pour traiter des données concernant une pluralité de sources d'énergie, dans lequel les sources d'énergie sont sélectionnées dans un groupe présentant de l'énergie électrique, de l'énergie stockée sous forme chimique, de l'énergie thermique.
